(19) Europäisches Patentamt / European Patent Office / Office européen des brevets

(11) EP 4 676 728 B1

(12) FASCICULE DE BREVET EUROPEEN

(45) Date de publication et mention de la délivrance du brevet: **19.08.2026 Bulletin 2026/34**

(21) Numéro de dépôt: **24709744.7**

(22) Date de dépôt: **07.03.2024**

(51) Classification Internationale des Brevets (IPC):
***B29D 30/00*** (2006.01) ***G01N 21/552*** (2014.01)
***G01N 21/77*** (2006.01) ***G01N 21/84*** (2006.01)

(52) Classification Coopérative des Brevets (CPC):
**G01N 21/77; B29D 30/0061; G01N 21/553;**
B29D 2030/0066; G01N 2021/7779;
G01N 2021/8416; G01N 2201/1296

(86) Numéro de dépôt international:
**PCT/EP2024/056076**

(87) Numéro de publication internationale:
**WO 2024/188819 (19.09.2024 Gazette 2024/38)**

# (54) PROCÉDÉ ET SYSTÈME DE CONTRÔLE DE FABRICATION DE PRODUITS CAOUTCHOUTEUX EN RÉPONSE AUX PROPRIÉTÉS PHYSICO-CHIMIQUES D'UN MÉLANGE CAOUTCHOUTEUX

VERFAHREN UND SYSTEM ZUR STEUERUNG DER HERSTELLUNG VON KAUTSCHUKPRODUKTEN ALS REAKTION AUF DIE PHYSIKALISCH-CHEMISCHEN EIGENSCHAFTEN EINER KAUTSCHUKMISCHUNG

METHOD AND SYSTEM FOR CONTROLLING THE MANUFACTURE OF RUBBER PRODUCTS IN RESPONSE TO THE PHYSICOCHEMICAL PROPERTIES OF A RUBBER MIXTURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **10.03.2023 FR 2302251**

(43) Date de publication de la demande:
**14.01.2026 Bulletin 2026/03**

(73) Titulaire: **COMPAGNIE GENERALE DES ETABLISSEMENTS MICHELIN**
**63000 Clermont-Ferrand (FR)**

(72) Inventeurs:
- **MONTOY, Aurelien**
  **63040 Clermont-Ferrand Cedex 09 (FR)**
- **DUSSEL, Benjamin**
  **63040 Clermont-Ferrand Cedex 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 0 652 430 WO-A1-2018/063264**

- **ABDULLAH A. H. ET AL: "Monitoring Rubber Factory Malodour Using Artificial Neural Network", vol. 77, no. 28, 21 December 2015 (2015-12-21), Malaysia, XP093092126, ISSN: 0127-9696, Retrieved from the Internet <URL:https://journals.utm.my/index.php/jurnalteknologi/article/download/6775/4487> DOI: 10.11113/jt.v77.6775**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 676 728 B1

## Description

### Domaine Technique

L'invention concerne l'utilisation des mesures sensiblement « olfactives » dans les installations où des produits caoutchouteux (y compris des pneumatiques) sont fabriqués à partir des mélanges caoutchouteux. Plus particulièrement, l'invention concerne des systèmes et des procédés pour déterminer des corrélations entre un ou des phénomènes physiques liés à un caoutchouc (par exemple, le collant) et les évolutions des composés organo-volatiles provenant des mélanges caoutchouteux.

### Contexte

Le domaine de fabrication des produits caoutchouteux (y compris des pneumatiques) à partir de mélanges caoutchouteux implique des procédés comprenant multiples étapes de transformation des matières premières, y compris, sans limitation, des étapes de broyage et de lavage, des étapes de convection chaude pour le séchage des miettes de caoutchouc humide, l'emballage du caoutchouc séché, et le stockage de caoutchouc fabriqué. Les émissions de des composés organiques volatils (ou « COV ») des caoutchoucs différents exposent un nombre d'odorants en termes de concentrations ainsi que de type d'odorant. Pendant ces procédés, la surveillance des COV présente une opportunité importante pour évaluer les changements dans la composition des COV émis pendant le traitement du caoutchouc.

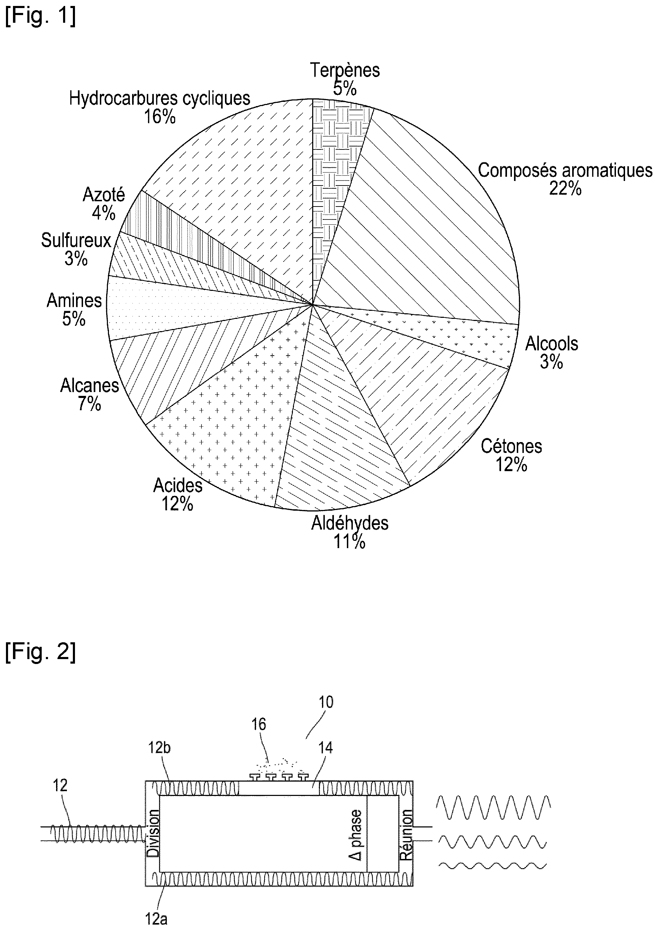

Dans une étude qui compare les COV émis directement à partir des matières premières du caoutchouc ou du caoutchouc non transformé, les composés identifiés ont été classés dans différents groupes chimiques (par exemple, acides, alcools, composés aromatiques, aldéhydes, alcanes, éthers, esters, hydrocarbures cycliques, cétones, sulfureux, azotés, terpènes, et autres)(voir « Quantification of VOCs and the Development of Odour Wheels for Rubber Processing », Nor H. Kamarulzaman, Nhat Le-Minh, Ruth M. Fisher, Richard M. Stuetz, Science of the Total Environment 657 (2019)) (« la référence Kamarulzaman »)). Dans cette étude, certains des odorants ont été soumis à une analyse comparative des COV afin d'identifier les tendances générales du comportement des émissions de caoutchouc. D'après cette étude, la variation des odeurs identifiées peut être associée à des propriétés spécifiques du caoutchouc, en particulier les niveaux de protéines et le taux d'humidité. A titre d'exemple, la Figure 1, correspondant à la Figure 8 de la référence Kamarulzaman, représente l'ensemble des groupes chimiques obtenus à partir d'un caoutchouc chauffé (voir aussi le Tableau 3 de la référence Kamarulzaman). Le groupe dominant de COV libérés par l'échantillon chauffé étaient les composés aromatiques, suivis des cétones, des aldéhydes, des acides et des composés de type cyclique. Les groupes sulfureux et azotés présentaient un pourcentage faible et similaire d'odorants, cependant ils étaient susceptibles de contribuer au profil olfactif.

Il existe dans le commerce des outils visant à reconnaître la présence d'un composé cible (par exemple, un analyte chimique ou biologique) dans un échantillon gazeux. Parmi ces outils, des nez électroniques emploient souvent un ou des capteurs qui mesurent la concentration d'une substance par résonance plasmonique de surface (connu dans l'art comme « SPR » ou « Surface Plasmon Resonance » en anglais)(voir « Highly-Selective Optoelectronic Nose Based on Surface Plasmon Resonance Imaging for Sensing Volatile Organic Compounds », Sophie Brenet, Aurelian John-Herpin, François-Xavier Gallat, Benjamin Musnier, Arnaud Buhot, Cyril Herrier, Tristan Rousselle, Thierry Livache, and Yanxia Hou, Analytical Chemistry, 90, 9879-9887 (2018). La technique SPR peut mesurer l'interaction entre les molécules en utilisant des principes optiques sans substance de marquage séparée telle qu'un matériau fluorescent. Les plasmons de surface sont des vibrations quantifiées d'électrons libres se propageant le long de la surface d'un conducteur, tel qu'une surface métallique. Ces plasmons de surface traversent un milieu diélectrique tel qu'un prisme et pénètrent dans un film métallique à un angle supérieur à l'angle critique du milieu diélectrique. Ils sont excités par la lumière incidente et provoquent une résonance à un certain angle. L'angle d'incidence auquel cette résonance se produit (appelé « l'angle de résonance ») est sensible aux variations de l'indice de réfraction d'un matériau proche du film métallique.

La SPR comprend une technique connue permettant de détecter un changement local d'indice optique (étant un indice de réfraction) qui caractérise l'interaction du composé cible avec chaque capteur du nez électronique. Les capteurs SPR peuvent analyser quantitativement les échantillons à partir du changement de l'indice de réfraction du matériau proche du film métallique (c.-à-d., un échantillon utilisant les propriétés ci-dessus). Pour l'analyse de COV, l'efficacité de la SPR contribue aux bonnes performances des nez électroniques, telles que leur sensibilité, leur sélectivité, leur répétabilité de performance et leur stabilité. Il existe aussi des solutions d'imagerie par SPR pour la détection des COV en phase gazeuse qui présentent une bonne répétabilité et une bonne stabilité (voir les solutions divulguées par les publications FR3063543, WO2021/009440, WO2021/053284 et WO2021/053285 et offertes dans le commerce par Aryballe Technologies). Un autre exemple d'une étude de recherche sur les mauvaises odeurs liées aux activités d'une usine de caoutchouc et dues aux composés organiques volatils (COV) émis pendant la fabrication est décrit dans la publication de Abdullah A. H. et al: "Monitoring Rubber Factory Malodour Using Artificial Neural Network", Jurnal Teknologi (Sciences & Engineering), vol. 77, no. 28 (2015) 11-16.

Il existe aussi des outils de détection de gaz du type interférométrie optique (ou « interférométrie ») qui peut être considéré comme une méthode de détection optique à médiation par film. L'interférométrie optique est une technique bien connue dont un changement dans la réponse optique d'un agent intermédiaire est utilisé pour quantifier les analytes absorbés/adsorbés sur la surface de détection. (voir « A Review of Interferometry Techniques for VOC Detection », Sulaiman Khan, Stéphane Le Calvé et David Newport, Sensors and Actuators A : Physical, DOI : (10.1016/j.sna.2019.111782), HAL :(hal-02379640)(2020)(la « référence Khan »).

L'interférométrie pour la détection des COV évalue les changements dans les matériaux de détection (particulièrement des films de détection de gaz). Lorsqu'un COV interagit avec un film de détection de gaz (étant généralement un polymère ou des silicates microporeux choisis en fonction des molécules cibles souhaitées), il modifie le volume (c.-à-d., l'épaisseur) et/ou les propriétés optiques (c.-à-d., l'indice de réfraction) du film par absorption/adsorption. Les perturbations correspondantes modifient la longueur effective du chemin optique, ce qui entraîne un déphasage quantifiable permettant de déduire la concentration de COV peut être déduite.

Les techniques d'interférométrie employées pour la détection des COV incluent la technologie interférométrique de type Mach-Zehnder (ou « interférométrique MZ » ou « Mach-Zehnder Interferometer » en anglais). En général, les interféromètres MZ emploient un principe de fonctionnement de l'interférométrie par répartition d'amplitude à deux faisceaux, l'un servant de chemin de référence (qui sert de base pour la mesure) et l'autre de chemin de détection (ou « chemin instrumenté »)(qui sert à perturber le signal d'interférence) (voir la référence Khan)(voir aussi « Correction de dérive pour l'interférométrie de Mach-Zehnder », Simon Barthelme et al., XXVIIIème Colloque Francophone de Traitement du Signal et des Images (Sep 2022))(« la référence Barthelme »). Le chemin de détection est exposé à un mesurande choisi (par exemple, température, pression, molécules de gaz, etc.), ce qui provoque la modulation du signal d'interférence.

Dans la détection des COV, le signal d'interférence est modifié par le changement d'indice de propagation du milieu dû à un peptide (chargé ou non de ligands). A titre d'exemple, la Figure 2, correspondant à la Figure 1 de la référence Barthelme, représente un interféromètre 10 utilisé comme capteur des COV. Une onde monochromatique (par exemple, une source laser) 12 est divisée en deux faisceaux comprenant un faisceau de référence 12a et un faisceau de détection 12b. Les deux faisceaux comprennent des faisceaux lumineux de même fréquence, de différence de phase constante et de même direction qui sont recombinés pour obtenir un signal d'interférence. Le faisceau détection 12b passe à travers une surface 14 qui capture des molécules dans le milieu ambiant 16. La présence de molécules à la surface 14 modifie son indice de réfraction, et, par conséquent, la phase de faisceau de détection 12b par rapport au faisceau de référence 12a. A la réunion des deux faisceaux 12a, 12b), ce déphasage se manifeste par une interférence 18, l'intensité de laquelle est mesurable par un capteur en sortie (par exemple, un dispositif à transfert de charge (ou « DTC » ou capteur CCD (« Charge Coupled Device » en anglais) (voir la référence Barthelme).

Les techniques de détection des COV basées sur l'interférométrie MZ sont reconnues pour l'incorporation d'une structure flexible avec de bonnes propriétés mécaniques. Cette structure est réalisée par moyens d'un processus de fabrication facile sans avoir besoin de différents processus de fibre optique (qui comprennent, sans limitation, le polissage, le gravure chimique et les processus d'effilage). Des exemples des solutions de détection de gaz par interféromètre MZ sont divulgués dans l'art antérieur (voir, par exemple, la solution divulguée par la publication FR3123988 et offerte dans le commerce par Aryballe Technologies)(voir aussi les biocapteurs offerts dans le commerce par la société Aromyx). Dans les capteurs à médiation par film (comme les interféromètres MZ), la sélectivité est considérée comme un défi majeur pour les applications réelles où le film de détection peut absorber/adsorber un certain nombre de molécules. Les progrès récents de l'intelligence artificielle, de l'apprentissage automatique et de l'analyse des données offrent une solution pour résoudre ce problème de la sélectivité des capteurs. Par exemple, les COV différents peuvent être différenciés en utilisant des méthodes de matrice inverse ou en employant des réseaux de neurones artificiels (voir la référence Khan).

En outre, l'amélioration récente des techniques d'apprentissage machine et de l'analyse des données, combinée à des plateformes de calcul et de stockage de données, a ouvert des voies pour le développement de nouvelles approches pour lier les profils olfactifs et les solutions utilisant les capteurs olfactifs (y compris les capteurs du type SPR et du type interférométrie MZ). Dans le domaine de l'intelligence artificielle (ou « IA »), les techniques d'apprentissage automatiques sont connues, et leur fondement est d'être « entraîné » sur un grand nombre de situations. Grâce à l'ajustement des coefficients de pondération dans une phase d'apprentissage, les performances de l'apprentissage automatiques peuvent prévoir le résultat d'une situation nouvelle qui serait présentée. Il est entendu que plusieurs méthodes d'apprentissage distinctes sont possibles, y compris l'apprentissage supervisé (dans lequel l'algorithme s'entraîne sur un ensemble de données étiquetées et se modifie jusqu'à être capable d'obtenir le résultat souhaité), l'apprentissage non-supervisé ou semi-supervisé (dans lequel les données ne sont pas étiquetées pour que le réseau puisse s'adapter pour augmenter la précision de l'algorithme), l'apprentissage renforcé (dans lequel l'algorithme est renforcé pour les résultats positifs et sanctionné pour les résultats négatifs) et l'apprentissage progressif (l'algorithme demande au fur et à mesure des exemples et labels pour affiner sa prédiction)(voir https://www.lebigdata.fr/reseau-de-neurones-artificiels-definition).

En cherchant à évaluer des paramètres d'un produit caoutchouteux, certains ne sont pas accessibles par des moyens de mesure. Par exemple, le vieillissement est actuellement géré par des dates de péremption empiriques.

Concernant le collant, les ateliers utilisent principalement des Tackmètres à billes permettant d'estimer le collant d'un produit, nécessitant la prise d'échantillon. Dans les deux cas, la mesure est soumise à l'effet « opérateur » en plus des autres erreurs de mesures.

Les progrès récents en matière de calcul, d'acquisition et d'analyse des données ont permis d'obtenir des mesures très précises et sensibles grâce à l'interférométrie. L'acquisition des données et leur traitement permettent l'apprentissage des données à grande échelle (apprentissage automatique). En considérant les signatures olfactives acquises par des capteurs électroniques des algorithmes d'apprentissage automatique peuvent être employés pour construire des modèles sur les propriétés d'un mélange caoutchouteux sur les bases des propriétés olfactives (c.-à-d., les propriétés physico-chimiques du mélange caoutchouteux concerné). A titre d'exemple, des algorithmes d'apprentissage tels que le Super Vector Machine (SVM), K-Nearest Neighbors (KNN), Random Forest (RF) et les réseaux neuronaux (NN) pourraient être employés pour obtenir une classification multi-classes des mélanges de caoutchouc fournis. A titre d'exemple, dans les situations où il peut être difficile de détecter une faible concentration de molécules avec seulement l'interférométrie, la détection en employant l'interférométrie avec un prétraitement simulé des mélanges de gaz serait utile dans les processus industriels.

Ainsi, l'établissement d'un lien entre les odeurs et les substances odorantes peut en profiter l'impact des odeurs dans la fabrication des produits caoutchouteux et de développer des pratiques efficaces de production et de gestion sur un site de production de produits caoutchouteux. L'invention divulguée associe donc les données obtenues par des nez électroniques (et les installations de production des produits caoutchouteux incorporant ces nez électroniques) pour en profiter les propriétés physico-chimiques connues dans le domaine de production de produits caoutchouteux (par exemple, des odeurs caractéristiques influençant le collant des mélanges sur les procédés industriels) (comme utilisés ici, les termes « mélange » et « mélange caoutchouteux » sont interchangeables). En utilisant un système à base intelligence artificielle, les données obtenues permettent d'établir un lien non évident entre l'aspect physico-chimique et de l'aspect olfactif du ou des produits caoutchouteux en cours de production. Le traitement des données permet de retirer des indicateurs concernant la gestion qualité du mélange ou la gestion de processus de mélangeage

**Résumé de l'invention**

L'invention concerne un procédé de contrôle de fabrication de produits caoutchouteux réalisé par un système de fabrication de produits caoutchouteux comprenant une installation de production ayant au moins un moyen de mélangeage qui met en œuvre des étapes successives de mélangeage d'un mélange caoutchouteux, caractérisé en ce que le procédé comprend les étapes suivantes :

- une étape de démarrage d'un cycle de mélangeage réalisé à l'installation de production;
- une étape de capture d'air ambiant autour de l'installation de production pour obtenir au moins un échantillon gazeux pendant le cycle de mélangeage, cette étape étant réalisée par un dispositif de détection d'odeur du système qui reconnaît la présence des composés organiques volatiles odorants (COV) présents dans l'air ambiant reçu dans le dispositif en capturant des ligands associés aux (COV) à détecter ;
- une étape de détection de profils olfactifs présents dans l'air ambiant et capturés par le dispositif par moyens d'une ou des techniques de capture de ligands choisie parmi au moins une entre :
- une ou des techniques de la résonance plasmonique de surface (« SPR ») ; et
- une ou des techniques de l'interférométrie Mach-Zehnder (MZ) ;
- une étape d'identification d'un profil olfactif pour identifier un mélange (M) sortant du moyen de mélangeage et son état de production, cette étape étant réalisée à partir d'au moins un échantillon de l'air ambiant capturée par le dispositif ;
- une étape d'analyse des échantillons capturés par le dispositif à partir d'une ou des empreintes fournies par le dispositif et les données extraites représentées dedans;
- une étape de construction d'au moins un modèle de profils olfactifs à partir des propriétés physico-chimiques du mélange caoutchouteux identifié, cette étape comprenant une étape d'introduction à un réseau neuronal des propriétés physico-chimiques du mélange caoutchouteux identifié, cette étape étant réalisée par le système ; et
- une étape d'entrainement du modèle de profils olfactifs à partir des profils olfactifs du mélange caoutchouteux identifié;

de sorte que le modèle de profils olfactifs sortant sera l'identification des propriétés physico-chimiques du mélange caoutchouteux en cours de production à l'installation de production. Dans certains modes de réalisation du procédé de l'invention, l'étape de construction du modèle de profils olfactifs comprend une étape de création d'une référence des profils olfactifs cherchés dans l'air ambiant d'être capturée par le dispositif.

Dans certains modes de réalisation du procédé de l'invention, l'étape d'introduction de l'étape de construction du modèle de profils olfactifs comprend une étape de création d'une base d'apprentissage des propriétés physico-chimiques

qui est introduite dans le modèle de profils olfactifs.

Dans certains modes de réalisation du procédé de l'invention, le procédé comprend en outre une étape de comparaison pendant laquelle l'identification des propriétés physico-chimiques du mélange sortant du moyen de mélangeage, ressorti du modèle de profils olfactifs, est comparé au profil olfactif du mélange identifié, de sorte que le système puisse ajuster l'installation de production où les propriétés souhaitées du mélange ne sont pas atteintes. Dans certains modes de réalisation du procédé de l'invention, le procédé comprend en outre une étape de commande d'ajustement de l'installation de production pour prévoir l'atteinte des propriétés souhaitées du mélange sortant du moyen de mélangeage.

Dans certains modes de réalisation du procédé de l'invention, l'étape de commande d'ajustement de l'installation de production comprend une étape de détermination d'un niveau de collant du mélange à partir d'une empreinte fournie par le dispositif.

Dans certains modes de réalisation du procédé de l'invention, pendant l'étape d'entrainement du modèle de profils olfactifs, le système emploie une méthode d'apprentissage choisie entre une méthode d'apprentissage automatique et une méthode d'apprentissage progressif.

Dans certains modes de réalisation du procédé de l'invention :

- l'étape de détection de profils olfactifs comprend une étape de suppression d'une pollution COV de l'air ambiant reçu par le dispositif, cette étape réalisée par un filtre du système avant l'entrée de l'air ambiant dans le dispositif ;
- l'étape d'identification d'un profil olfactif comprend une étape de diminution de l'humidité et/ou de la température dans l'air ambiant reçu par le dispositif, cette étape étant réalisée par un condenseur du système ; et
- l'étape d'analyse des échantillons capturés par le dispositif comprend en outre une étape d'analyse de profils olfactifs dans les échantillons avant l'analyse réalisée par le dispositif, cette étape étant réalisée par un multiplexeur du système.

Dans certains modes de réalisation du procédé de l'invention, l'étape de démarrage d'un cycle de mélangeage comprend une étape d'introduction, dans le moyen de mélangeage, des matières premières nécessaires à la réalisation de la production du mélange.

Dans certains modes de réalisation du procédé de l'invention, l'étape de démarrage d'un cycle de mélangeage comprend une étape d'introduction, dans le moyen de mélangeage, d'un ou des masterbatchs.

Dans certains modes de réalisation du procédé de l'invention, une étape de simulation d'un nombre de mélanges permettant de réaliser au moins un mélange caoutchouteux ayant des propriétés physico-chimiques prédéterminées.

L'invention concerne aussi un système de fabrication de produits caoutchouteux qui réalise un procédé (200) de contrôle de fabrication de produits caoutchouteux, caractérisé en ce que le système (100) comprend :

- une installation de production qui met en œuvre des étapes successives de mélangeage, l'installation de production comprenant au moins un moyen de mélangeage duquel un ou des mélanges caoutchouteux sortent;
- un dispositif de détection d'odeur qui capture un air ambiant autour de l'installation de production pour obtenir au moins un échantillon gazeux pendant le cycle de mélangeage ; et
- un sous-système de contrôle qui emploie un modèle de profils olfactifs à partir des caractéristiques physico-chimiques des mélanges caoutchouteux reconnus par moyens d'une ou des techniques de capture de ligands choisie parmi au moins une entre :
- une ou des techniques de la résonance plasmonique de surface (SPR) ; et
- une ou des techniques de l'interférométrie Mach-Zehnder (MZ) ; de sorte que le dispositif reconnaît la présence des composés organiques volatiles odorants (COV) présents dans l'air ambiant capturé en capturant des ligands associés aux COV à détecter; et

de sorte que le modèle de profils olfactifs apprend les propriétés physico-chimiques des (COV) associées avec les mélanges sortant du moyen de mélangeage pendant les cycles de production de produits caoutchouteux réalisés par l'installation de production.

Dans certains modes de réalisation du système de l'invention, le sous-système comprend un ou des capteurs qui déclenchent lorsque le modèle de profils olfactifs sortant indique un décalage entre les propriétés physico-chimiques du mélange en cours de production à l'installation de production et les propriétés physico-chimiques attendues.

Dans certains modes de réalisation du système de l'invention, le sous-système ajuste le fonctionnement de l'installation de production en réponse aux capteurs déclenchés pour obtenir un niveau de collant du mélange à partir d'une empreinte fournie par le dispositif. Dans certains modes de réalisation du système de l'invention, le moyen de mélangeage est choisi parmi une ou des extrudeuses et/ou un ou des mélangeurs internes.

D'autres aspects de l'invention vont devenir évidents grâce à la description détaillée suivante.

**Brève description des dessins**

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :

**[Fig 1]** La Figure 1 représente un ensemble des groupes chimiques obtenus à partir d'un caoutchouc chauffé.
**[Fig 2]** La Figure 2 représente un mode de réalisation d'un interféromètre Mach-Zehnder caoutchouc chauffé.
**[Fig 3]** La Figure 3 représente un mode de réalisation d'un système de fabrication de produits caoutchouteux de l'invention.
**[Fig 4]** La Figure 4 représente une schématique d'un principe de détection par capture des ligands réalisé par un dispositif de détection d'odeur du système de la Figure 3.
**[Fig 5]** La Figure 5 représente un mode de réalisation du système de la Figure 3.
**[Fig 6]** La Figure 6 représente un mode de réalisation d'un procédé de contrôle de fabrication de produits caoutchouteux réalisé par le système de l'invention.

**Description détaillée**

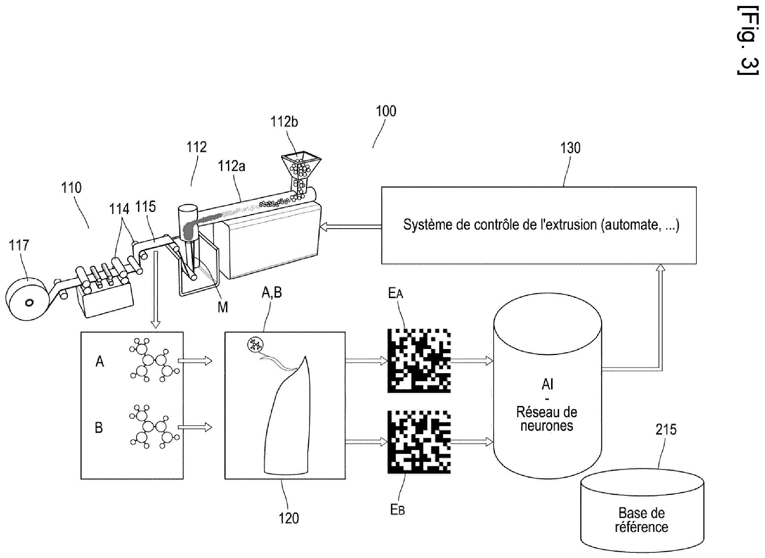

En se référant maintenant aux Figures, sur lesquelles les mêmes numéros identifient des éléments identiques, la Figure 3 représente un système de fabrication de produits caoutchouteux (ou « système ») 100 de l'invention. Le système 100 réalise un procédé de contrôle de fabrication de produits caoutchouteux en réponse à l'entrée des données obtenues par un outil de détection permettant une classification physico-chimique (aussi appelé un « nez électronique ») du système. Le système 100 est utilisable dans les installations où des produits caoutchouteux sont fabriqués (y compris des pneumatiques). Il est entendu que le système 100 peut fonctionner dans plusieurs environnements physiques sans connaissance de leurs paramètres en avance (par exemple, un arrangement initial d'une ligne de production de produits caoutchouteux de laquelle le système 100 fait partie).

Le système 100 comprend une installation de production (ou « installation ») 110 qui met en œuvre des étapes successives de mélangeage et de fin de ligne. Comme représenté dans la Figure 3, l'installation de production 110 comprend au moins un moyen de mélangeage 112 qui met en œuvre des étapes successives de mélangeage d'un mélange caoutchouteux. A titre d'exemple, le moyen de mélangeage 112 peut comprendre au moins une extrudeuse 112a avec un châssis avec des parties communes assemblées, qui peuvent comprendre, sans limitation, un ensemble vis-fourreau (avec ou sans ses accessoires facultatifs de chauffage et de refroidissement ), un groupe d'entraînement (du réducteur et accouplement), un moteur principal, des dispositifs pour l'alimentation en matière (par exemple, des doseurs ou des trémies 112b), une armoire de pilotage qui réunit les variateurs des moteurs, des organes de démarrage et de sécurité, et des dispositifs de régulation, de commande, d'affichage et de mesure. L'extrudeuse 112a peut être une extrudeuse mono-vis, une extrudeuse bi-vis ou une extrudeuse à plusieurs vis.

Il est entendu que le moyen de mélangeage 112 peut incorporer, au lieu de l'extrudeuse 112a, un ou des mélangeurs internes connus (non représentés) qui réalisent la fabrication d'un mélange initial de matériaux élastomères avec une charge de noir de carbone et/ou de silice. Par « mélangeur interne », on entend une machine constituée d'un pilon et de deux demi-cuves (ou « cuves »), chacune contenant un rotor avec une ou plusieurs pâles (par exemple, une machine de type Banbury ou Intermix pour polymères). Dans un autre exemple, le moyen de mélangeage 112 peut incorporer au moins un mélangeur externe automatisé (également appelé « mélangeur à cylindres » ou « outil à cylindres ») dans lequel est ensuite transféré ce mélange travaille en le faisant encore circuler entre deux cylindres de manière à le transformer en une nappe continue. Des produits de vulcanisation (incluant, sans s'y limiter, le soufre) peuvent être ajoutés au mélange plus tard dans un cycle de mélangeage pour obtenir le mélange final à usage commercial.

A titre d'exemple, l'installation de production 110 comprend en outre un ou des outils à cylindres 114 qui mettent en forme d'une bande 115 le mélange M sortant de l'extrudeuse 112a. La bande 115 passe vers un ou des outils à cylindres 114 pour la mettre en forme continue avec une largeur prédéterminée et pour réaliser le refroidissement du mélange fabriqué. Il est entendu que chaque outil à cylindres peut comprendre des moyens de refroidissement internes comme connus par l'homme du métier.

L'installation de production 110 peut comprendre un dispositif de coupe ou de mise en forme de la matière extrudée. Par exemple, la bande 115 continue formée peut être enroulée en rouleaux (représentés, à titre d'exemple, par le rouleau 117 de la Figure 3) pour faciliter le stockage du mélange produit.

Il est entendu que la configuration de l'installation de production 110 est donnée à titre d'exemple et que le système 100 pourrait faire partie d'autres configurations et/ou d'autres installations de fabrication et/ou de traitement de produits caoutchouteux.

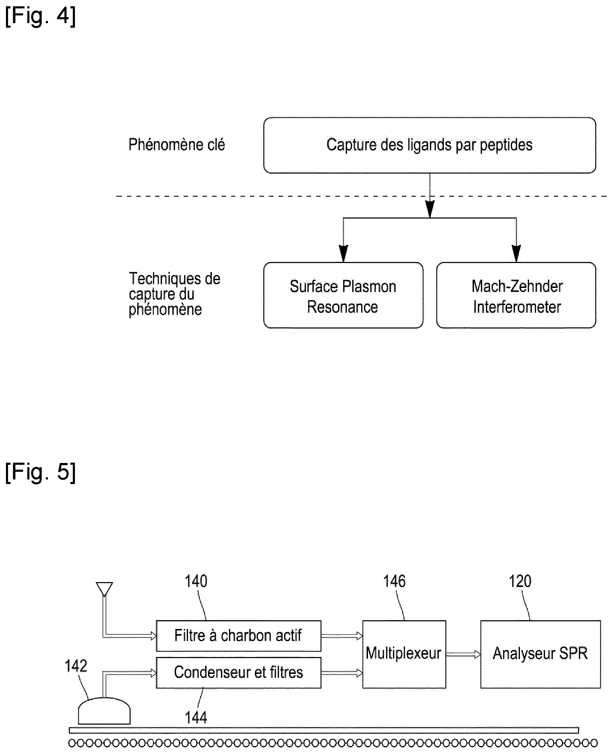

En se référant encore à la Figure 3 et en outre à la Figure 4, le système 100 comprend aussi un dispositif de

détection d'odeur (ou « dispositif ») 120 visant à reconnaître la présence d'un composé cible en mesurant sa concentration dans l'air ambiant autour de l'installation de production 110. Le dispositif 120 emploie un principe de détection par capture des ligands associés aux COV à détecter (par exemple, des molécules organiques, des molécules biologiques, des micro-organismes, etc.). Dans ces méthodes de capture, les ligands (qui sont représentatifs des COV) s'accrochent sur des récepteurs (par exemple, des peptides) immobilisés sur un interface support, et ils modifient les constantes diélectriques de ces récepteurs. Ces méthodes ne nécessitent aucun marquage préalable des molécules cibles, permettant donc une détection en temps réel qui peut être quantitative. Ces méthodes pourraient être choisies parmi une ou des techniques de capture des ligands, y compris les techniques de la résonance plasmonique de surface (« SPR ») et les techniques de l'interférométrie MZ.

Dans un mode de réalisation du système 100, le dispositif 120 comprend un dispositif de détection d'odeur visant à reconnaître la présence d'un composé cible en mesurant sa concentration par SPR. La SPR est une technique optique qui utilise l'interaction lumière-matière. Dans le cas de la SPR, les récepteurs de ligands (e.g., des peptides) sont immobilisés sur une plaque métallique, et la capture de ligands modifie son indice de réflexion. En conséquence, l'onde électromagnétique émise sera réfléchie avec un angle différent en fonction de la quantité.

Dans ce mode de réalisation, le dispositif 120 peut comprendre un ventilateur (ou un dispositif d'aspiration équivalent) (non représenté) qui aspire l'air ambiant autour de l'installation de production 110 et le fait entrer dans le dispositif. Le flux d'air ambiant peut être réglé par un moyen d'aération pouvant être sélectivement garder et évacuer l'air ambiant (par exemple, une vanne pouvant être sélectivement ouvert et fermé).

Dans ce mode de réalisation du système 100, le dispositif 120 comprend un ou des capteurs (non représentés) qui détectent la présence des composés organiques volatiles odorants (ou « COV ») présents dans l'air ambiant autour de l'installation de production 110. Les capteurs incorporent une partie sensible qui interagit avec les COV (par exemple, des COV émis par le mélange M en cours de production à l'installation de production 110 et représentés par les molécules A et B dans la Figure 3). Chaque capteur peut détecter les composés d'une famille prédéterminée de composés. Comme entendu par l'homme du métier, cette partie sensible peut se constituer de matériaux non biologiques (tels que des oxydes métalliques semi-conducteurs (ou « MOS ») et des polymères semi-conducteurs) ou des molécules organiques (par exemple, des peptides).

Dans ce mode de réalisation, le dispositif 120 comprend en outre un film mince, et particulièrement une couche métallique (non représenté), présentant une surface qui reste au contact avec l'air ambiant entrant dans le dispositif. La couche métallique comprend une couche d'un métal connu pour réaliser l'effet SPR (par exemple, l'or ou l'argent). Les capteurs sont disposés sur cette couche métallique dans un positionnement prédéterminé. Dans ce mode de réalisation, le dispositif 120 comprend aussi un prisme (non représenté) ayant une face d'entrée qui permet l'entrée de lumière, une face de sortie qui permet la sortie de lumière et une face de support sur laquelle la couche métallique est disposée. Dans un procédé réalisant l'effet SPR, un dispositif d'éclairage du dispositif 120 émet une lumière collimatée au travers de la face d'entrée du prisme jusqu'à une surface de la couche métallique, cette surface présentant une réflectivité connue. Le dispositif d'éclairage peut être choisi parmi les dispositifs d'éclairage disponibles dans le commerce, y compris, sans limitation, des lumières du type LED (ou « light emitting diode » en anglais).

Le dispositif d'éclairage, étant sensible à l'indice de réfraction de l'air ambiant présente dans le dispositif 120, produit une résonance de plasmons sur la surface de la couche métallique. Cette résonance, étant sensible à l'indice de réfraction de l'air ambiant présente dans le dispositif 120, diminue la réflectivité de la couche métallique pour qu'elle varie à proximité de chaque capteur. Le dispositif 120 peut être choisi parmi des dispositifs de détection d'odeur (ou « nez électroniques ») disponibles dans le commerce (par exemple, du type « NeOse Pro » offert par la société Aryballe, mais il est entendu que d'autres dispositifs équivalents peuvent être utilisés).

Un système de ce type est décrit dans la demande FR2112099 de la Demanderesse.

Dans un autre mode de réalisation du système 100, le dispositif 120 comprend un dispositif de détection d'odeur visant à reconnaître la présence d'un composé cible en mesurant sa concentration par moyen d'un ou des interféromètres Mach-Zehnder (MZ). L'interférométrie Mach-Zehnder (MZI) est un moyen de mesure optique permettant de mesurer un changement d'indice du milieu ambiant dans lequel se propage une onde source (ici, un faisceau lumineux). Comme décrit ci-avant, les ligands en s'accrochant sur un récepteur vont modifier les constantes diélectriques du support ce qui va en conséquence modifier l'indice de propagation dans le milieu. Pour couvrir une large variété de COV, le dispositif 120 peut comprendre (ou peut mettre en œuvre) un réseau d'interféromètres MZ (par exemple, pour pouvoir réaliser des mesures similaires à la méthode SPR). L'interféromètre MZ employé peut être du type représenté dans la Figure 2 ou un équivalent de celui-ci.

Dans ce mode de réalisation du système 100, le dispositif 120 pourrait employer la technologie de silicon photonics qui permet de mettre, dans un espace réduit, plusieurs dizaines d'interféromètres en réseau (voir, par exemple, des dispositifs de détection d'odeur (ou « nez électroniques ») disponibles dans le commerce du type « NeOse Advance » offert par la société Aryballe et les dispositifs équivalents). Dans ce mode de réalisation, lorsqu'une odeur d'entrée est introduite au dispositif 120, les COV se lient aux biocapteurs (il est entendu que l'intensité des odeurs enregistrées par les biocapteurs varie). Lorsqu'une source de lumière passe par ces connexions, la source recombinée est enregistrée devant

le capteur optique. Grâce au principe des interféromètres Mach-Zehnder, la variation de la source lumineuse est mesurée, et ce changement répond aux intensités enregistrées par chaque biocapteur. Ainsi, les résultats de l'ensemble du réseau de biocapteurs représentent le modèle unique de l'odeur d'entrée réactive (ou « signature »). Cette signature peut être représentée comme un tableau de valeurs brutes (non normalisées).

En se référant encore aux Figures 3 et 4 et en outre à la Figure 5, au moins un filtre 140 facultative pourrait être inclus dans le système 100 pour supprimer une pollution COV de l'environnement autour de l'installation de production 110. Le filtre 140 permet d'appauvrir la pollution COV (en soufre, par exemple), permettant donc l'obtention d'une référence stable pour construire le modèle de profils olfactifs. Dans un mode de réalisation du filtre 140, le filtre comprend un filtre à charbon actif qui est bien connu comme un purificateur de l'air. Pour réaliser la captation des COV du ou des mélanges en cours de production, le système 100 comprend en outre une coupole de concentration de gaz 142 qui communique avec un condenseur 144 du système 100 (la couple 142 est choisie parmi les couples disponible dans le commerce, par exemple, du type offert par la société SoluProTech). Le condenseur 144, qui est choisi parmi les condenseurs connus et disponibles dans le commerce, permet de diminuer l'humidité et la température de l'air ambiant. Dans ce mode de réalisation, le système 100 peut comprendre un multiplexeur 146 facultative permettant l'analyse de multiples composés cibles avant l'analyse réalisée par le dispositif 120.

Dans tous les modes de réalisation du système 100, le dispositif 120 incorpore (ou est disposé en communication avec) au moins un processeur qui est configuré à détecter les COV présents dans l'air ambiant et capturés par le dispositif (soit par la technique SPR soit par la technique interférométrie MZ). Le terme "processeur" (ou, alternativement, le terme "circuit logique programmable") désigne un ou plusieurs dispositifs capables de traiter et d'analyser des données et comprenant un ou plusieurs logiciels pour leur traitement (par exemple, un ou plusieurs circuits intégrés connus par l'homme de métier comme étant inclus dans un ordinateur, un ou plusieurs contrôleurs, un ou plusieurs microcontrôleurs, un ou plusieurs micro-ordinateurs, un ou plusieurs automates programmables (ou « PLC »), un ou plusieurs circuits intégrés spécifiques à une application, un ou plusieurs réseaux de neurones, et/ou un ou plusieurs autres circuits programmables équivalents connus). Le processeur comprend un ou des logiciels pour le traitement des composés volatiles capturés par le dispositif 120 (et les données correspondantes obtenues) ainsi qu'un ou des logiciels pour l'identification et la classification des profils olfactifs permettant l'identifications des COV dans le cours de production des mélanges caoutchouteux. Le processeur comprend aussi un ou des logiciels pour le traitement des sous-systèmes associés avec le système 100 (et les données correspondantes obtenues) ainsi qu'un ou des logiciels pour l'identification des variances et l'identification de leurs sources pour les corriger.

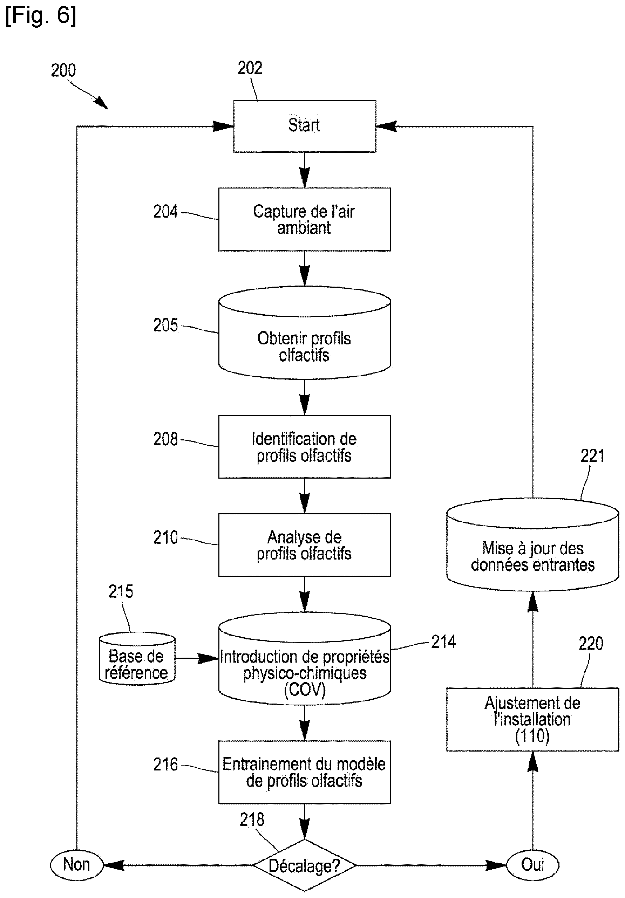

Le ou les processeurs sont connectés de manière opérationnelle à une mémoire configurée pour stocker une application d'analyse des données représentatives des profils olfactifs captés par le dispositif 120. Le ou les processeurs comprennent un module d'exécution d'application d'analyse des odeurs entrantes dans le dispositif 120, dont le ou les processeurs sont capables d'exécuter des instructions programmées stockées dans la mémoire pour réaliser les étapes d'un procédé de contrôle de fabrication de produits caoutchouteux de l'invention (comme décrites ci-dessous en référence au procédé 200 de la Figure 6). La mémoire peut comprendre à la fois des dispositifs de mémoire volatiles et non volatiles. La mémoire non volatile peut comprendre des mémoires à l'état solide, telles que la mémoire flash NAND, la mémoire « vive » (ou « keep-alive memory » ou « KAM ») pour sauvegarder des variables diverses de fonctionnement pendant que le processeur est hors tension, des supports de stockage magnétiques et optiques, ou tout autre dispositif de stockage de données approprié qui conserve les données lorsque le dispositif 120 (et/ou le système 100 incorporant le dispositif 120) est désactivé ou perd son alimentation électrique. La mémoire volatile peut comprendre une mémoire statique et dynamique RAM qui stocke des instructions de programme et des données, y compris une application d'apprentissage.

Pour bien gérer la reconnaissance de l'odeur entrant dans le dispositif 120, il faut identifier, dans les COV présents dans l'air ambiant autour de l'installation de production 110, l'odeur caractérisant le ou les produits caoutchouteux en cours de production. Particulièrement, l'identification de profils olfactifs correspondant aux plusieurs composés volatils est pertinente pour déterminer des corrélations entre une propriété physico-chimique liée au caoutchouc (par exemple, le collant) et les évolutions des COV provenant des mélanges de caoutchouc. L'identification de profils olfactifs peut être réalisée d'une manière incorporant la construction d'un ou des modèles associés avec les aspects chimiques et les aspects olfactifs d'un ou des composés cibles (aussi appelé « le modèle de profils olfactifs »). Un modèle de profils olfactifs peut être utilisé en apprenant les propriétés physico-chimiques associées avec les mélanges caoutchouteux pendant les cycles de production de produits caoutchouteux.

Le terme "composé cible" (dans le singulier ou le pluriel) est utilisé ici pour faire référence à un composé associé avec un produit caoutchouteux (y compris le mélange M) en cours de production dans l'environnement physique du système 100 et qui est identifié en fonction de données obtenues par le dispositif 120. Afin de créer une "boîte noire" liée aux mélanges caoutchouteux et leurs profils olfactifs, les paramètres des mélanges caoutchouteux différents peuvent être utilisés pour former un ou plusieurs modèles de profils olfactifs. Ces données accumulées dans la boîte noire peuvent être utilisées pour prendre des décisions concernant le contrôle des paramètres de l'installation de production 110 du système 100 en examinant les profils odorants des mélanges caoutchouteux sortant de l'installation, les profils odorants actuels disponibles, les profils odorants des mélanges similaires, et/ou le temps passé à détecter les COV particuliers dans un

cycle de mélangeage.

En se référant encore à la Figure 3, un mode de réalisation d'intelligence artificielle peut être employé par le système 100 pour construire au moins un modèle de profils olfactifs. Dans des modes de réalisation, le processeur (seul ou en combinaison avec un ou d'autres processeurs) peut configurer le système 100 (et notamment le dispositif 120) sur un ou plusieurs propriétés physico-chimiques enregistrées dans le modèle de profils olfactifs. Le processeur peut également se référer à une référence pour effectuer une détermination finale du ou des propriétés physico-chimiques attendues. La référence peut comprendre au moins une base de référence incorporant, par exemple, une bibliothèque référentielle de COV de mélanges caoutchouteux variés (y compris, sans limitation, des propriétés physico-chimiques correspondant aux COV à un temps précis dans le cours d'un cycle de mélangeage d'un mélange caoutchouteux). Le processeur peut comparer des propriétés physico-chimiques du mélange M sortant du moyen de mélangeage 112 et le profil olfactif du mélange identifié, y compris les COV dévoilés par l'effet SPR et/ou les COV identifié par l'interférométrie MZ, de sorte que le système 100 puisse ajuster l'installation de production 110 où les propriétés souhaitées du mélange M ne sont pas atteintes (par exemple, en envoyant une commande d'ajustement de l'installation de production 110 pour prévoir l'atteinte des propriétés souhaitées du mélange). Le processeur peut récupérer les propriétés physico-chimiques de l'air ambiant capturé dans le dispositif 120 qui correspondent le plus étroitement aux propriétés reconnues pour configurer le dispositif. Une référence de l'air ambiant peut inclure aussi des mesures COV correspondant à une pluralité de profils olfactifs connus (voir, à titre d'exemple, la Figure 1).

Les données correspondantes à l'air ambiant capturée par le dispositif 120 sont transférées et stockées dans la mémoire du processeur. Le processeur, qui exécute les instructions d'un module de traitement de données du processeur, analyse les données pour déterminer un ou plusieurs profils olfactifs correspondant au mélange de caoutchouc en cours de production à l'installation de production 110. Les profils olfactifs sont généralement les indicateurs des caractéristiques physico-chimiques du mélange en cours de production. La détection de différents groupes chimiques, comme les COV, permet de discriminer les émissions du mélange M. Le processeur peut détecter des changements dans les propriétés du mélange M pour identifier au moins un composé volatil associé. D'autres caractéristiques du mélange M peuvent également être déterminés.

Les données capturées peuvent être appliquées à un déterminant de propriétés physico-chimiques, y compris les COV, qui peut exploiter un ou plusieurs modèles d'apprentissage supervisés pour génerer les composés cibles. Ceux-ci incluent, sans limitation, les modèles utilisant la régression linéaire, la régression logistique, les arbres de décision (ou « Random Forest » en anglais), les techniques du type machines à vecteurs de support (ou « support vector machine » en anglais, ou « SVM »), les Bayes naïfs, les algorithmes K plus proches voisins (ou « K-nearest neighbors » en anglais ou « kNN »), les algorithmes de réduction de la dimensionnalité, les algoïsmes à gradient, les réseaux de neurones (par exemple, les auto-encodeurs, les réseaux neuronaux convolutifs (ou « convolutional neural network » en anglais or « CNN »), les réseaux de neurones récurrents (ou « recurrent neural network » en anglais or « RNN »), les perceptrons, la mémoire logarithmique à court terme (LSTM), Hopfield, Boltzmann, l'apprentissage profond, la déconvolution, la confrontation générative (GAN), etc. ) et leurs compléments et leurs équivalents. Dans les modes de réalisation qui emploient un ou des réseaux neuronaux, un ou des CNNs peuvent être formés avec des données de vérité de terrain (ou « ground truth » en anglais) qui sont représentées dans une référence des COV créée pendant un procédé de contrôle de fabrication de produits caoutchouteux réalisé par le système 100.

Dans un mode de réalisation, le système 100 pourrait être optimisé par le principe d'apprentissage progressif (ou « shaping » en anglais). L'apprentissage progressif permet l'apprentissage de nouvelles tâches par la réutilisation de caractéristiques apprises dans des tâches antérieures et l'utilisation des caractéristiques en cours d'apprentissage. À un moment donné, les caractéristiques apprises sont utilisées pour effectuer des tâches hors ligne qui peuvent être non supervisées, supervisées ou semi-supervisées. Le modèle, ayant déjà l'expérience de la politique à adopter dans un problème du même type (par exemple, des COV attribués à un mélange caoutchouteux collant), a une progression plus rapide que la performance obtenue par un apprentissage en partant de zéro. Pour l'invention divulguée, l'entrainement d'un réseau de neurones dans le but d'identifier les facteurs primaires de la SPR et/ou de l'interféromètre MZ permettant ainsi l'estimation d'une propriété physico-chimique (par exemple, le collant, le vieillissement, la pollution, etc.), peut nécessiter une quantité énorme de données pour obtenir le résultat escompté. C'est pour cela que l'apprentissage progressif peut être choisi à l'optimisation du temps d'apprentissage.

Le système 100 de l'invention utilise donc une ou des techniques de capture de ligands comprenant au moins une parmi les techniques SPR et les techniques de l'interférométrie MZ afin de fournir une ou des empreintes numériques (« empreintes ») des COV capturés. A titre d'exemple, les empreintes $E_A$ et $E_B$ de la Figure 3 représentent les COV émis par le mélange M.

En se référant encore aux Figures 3 et 4, le système 100 comprend en outre un sous-système de contrôle (ou « sous-système ») 130. Le sous-système 130 emploie le modèle de profils olfactifs sortant du réseau neuronal pour contrôler le fonctionnement de l'installation de production 110 en réponse à la présence des composés cibles dans l'air ambiant de l'installation. Les capteurs du sous-système 130 peuvent déclencher lorsque le modèle de profils olfactifs sortant indique un décalage entre les propriétés physico-chimiques du mélange M en cours de production à l'installation

de production 110 (représenté, par exemple, par l'empreinte $E_A$, $E_B$ du mélange fourni par le dispositif 120) et les propriétés physico-chimiques attendues. Le dispositif 120 peut détecter la présence des composés cibles dans l'air ambiant autour de l'installation de production 110, ce qui déclenche le sous-système 130 (par exemple, de manière permettant de changer la vitesse de rotation des vis dans l'extrudeuse 112a). A titre d'exemple, le dispositif 120 peut détecter la présence des composés cibles à un niveau indiquant un mélange trop collant, permettant une modification des matières premières entrant dans à l'extrudeuse 112a. Dans un autre exemple, la détection de l'air ambiant par le dispositif 120 peut signaler un écoulement nécessitant un changement de vis (par exemple, les vis pouvant être choisies parmi des profils co-rotatifs interpénétrés avec profils conjugués, des profils conjugués ou non, des vis parallèles ou coniques, des profils mono-filets ou multi-filets, et des vis modulaire ou non).

Dans certains modes de réalisation, le sous-système 130 comprend un ou des capteurs (non représentés) qui déclenchent lorsqu'une image de l'installation de production 110, ensemble avec le modèle de profils olfactifs sortant, indique un décalage entre les propriétés physico-chimiques du mélange caoutchouteux en cours de production à l'installation de production 110 et les propriétés physico-chimiques attendues. Dans ce sens, un capteur du sous-système 130 peut comprendre une caméra, un appareil photo, un capteur optique et/ou d'autres types de détection équivalents.

En se référant encore aux Figures 3 à 5, et en outre à la Figure 6, une description détaillée est donnée à titre d'exemple d'un procédé de contrôle de fabrication de produits caoutchouteux en réponse à l'entrée des données obtenues par le dispositif 120 (ou « procédé de contrôle de fabrication » ou « procédé ») 200 de l'invention réalisé par le système 100.

En lançant un procédé de contrôle de fabrication de produits caoutchouteux 200 de l'invention, le procédé comprend une étape de démarrage 202 d'un cycle de mélangeage à l'installation de production 110. Cette étape comprend une étape d'introduction, dans le moyen de mélangeage 112, des différentes matières premières nécessaires à la réalisation de la production de produits caoutchouteux ayant des propriétés souhaitées (voir la flèche A de la Figure 3). Ces matières premières comprennent, sans limitation, un matériau élastomère (par exemple, un caoutchouc naturel, un élastomère synthétique et des combinaisons et équivalents de ceux-ci) et un ou plusieurs ingrédients, tels qu'un ou plusieurs agents de mise en œuvre, agents de protection et charges de renforcement. Les matières premières peuvent également comprendre un ou plusieurs autres ingrédients tels que le noir de carbone, la silice, les huiles, les résines et les agents de réticulation ou vulcanisation (par exemple, le soufre). Tous les ingrédients sont introduits dans des quantités variables en fonction des performances souhaitées des produits obtenus des procédés de mélangeage (par exemple, des pneumatiques).

Le cycle de mélangeage peut également se faire en démarrant le cycle avec un produit déjà mélangé mais ne contenant pas tous les ingrédients de la recette de mélange choisie (appelé « masterbatch »). Par exemple, les résines et les agents de vulcanisation ne sont pas présents dans le masterbatch. Dans ce cas, soit le masterbatch est récupéré chaud en provenance d'un mélangeur en amont de l'installation de production 110 (tel qu'un mélangeur interne ou un mélangeur externe), soit le masterbatch est froid car il a été fabriqué et conditionné plusieurs heures voire plusieurs jours au préalable.

Pendant cette étape, le moyen de mélangeage 112 est mis en œuvre (par exemple, dans les cas où le moyen de mélangeage comprend l'extrudeuse 112a, la ou les vis de l'extrudeuse sont mises en rotation pour provoquer un mouvement du mélange caoutchouteux vers l'aval de l'extrudeuse dès l'introduction des matières premières) (voir la flèche B de la Figure 3). Il est entendu que le cycle de mélangeage peut être facilement adapté pour tous les modes de réalisation de l'installation de production 110 (par exemple, les modes de réalisation incorporant des mélangeurs internes au lieu de l'extrudeuse 112a). Pendant cette étape, les outils à cylindres 114 mettent en forme la bande 115 du mélange M sortant du moyen de mélangeage 112, et la bande 115 continue formée est enroulée en rouleaux 117 pour faciliter le stockage du mélange.

Le procédé de contrôle de fabrication de l'invention comprend aussi une étape de capture 204 de l'air ambiant autour de l'installation de production 110 pour obtenir un ou des échantillons gazeux pendant la production de la bande 115. Cette étape, étant réalisée par le dispositif 120 du système 100, peut être réalisée d'une manière itérative en fonction de nombre d'échantillons prévus pour alimenter le réseau neuronal. Dans les modes de réalisation du dispositif 120 incorporant une technique du type SPR, l'étape de capture met en œuvre un effet SPR utilisant un changement local de l'indice de réfraction du mélange caoutchouteux produit par l'installation de production 110. Dans les modes de réalisation du dispositif 120 incorporant une technique du type interférométrie MZ, l'étape de capture met en œuvre un effet interférométrie MZ utilisant un déphasage des faisceaux lumineux permettant une mesure des profils olfactifs émis produits par le mélange caoutchouteux en cours de production à l'installation de production 110.

Le procédé de contrôle de fabrication 200 de l'invention comprend en outre une étape de détection des profils olfactifs, y compris les COV, présents dans l'air ambiant et capturés par les capteurs du dispositif 120. Pendant cette étape, ces profils olfactifs détectés sont enregistrés dans une ou des bases de données 205. Des paramètres différents, tels que les caractéristiques des gaz (y compris la nature et la concentration des produits chimiques, les propriétés physico-chimiques des produits chimiques, par exemple, solubilité, pression de vapeur saturante et biodégradabilité), les conditions d'exploitation et les variations du taux d'humidité de l'environnement peuvent influencer la durée de cette

étape.

Dans les modes de réalisation du système 100 incorporant un filtre 140, cette étape comprend une étape de suppression de la pollution COV de l'air ambiant avant son entrée dans le dispositif 120.

Le procédé de contrôle de fabrication 200 de l'invention comprend en outre une étape d'identification 208 d'un profil olfactif pour identifier le mélange caoutchouteux en cours de production et son état de production. Cette étape est réalisée à partir d'au moins un échantillon de l'air ambiant capturée par le dispositif 120. Les identifications peuvent être réalisées en fonction du nombre d'échantillons d'être capturé. Pendant cette étape, les données extraites sont traitées et normalisées par le dispositif 120 pour que les COV puissent être mesurés (soit par les techniques SPR soit par les techniques interférométrie MZ). Le dispositif 120 fournit une empreinte des COV présents dans chaque échantillon mesuré (voir, par exemple, les empreinte $E_A$ et $E_B$ représentées dans la Figure 3). Cette empreinte « olfactive », étant une image du profil olfactif à l'instant de sa mesure, varie en fonction des traitements réalisés sur le mélange ou son évolution attendue pendant la réalisation d'un cycle de mélangeage.

Dans les modes de réalisation du système 100 incorporant le condenseur 144, cette étape comprend une étape de diminution de l'humidité et/ou de la température dans l'air ambiant capturée par le dispositif 120.

Dans un mode de réalisation, pendant l'étape d'identification 208 d'un profil olfactif, le dispositif 120 peut produire automatiquement plusieurs empreintes (par exemple, dans le cours d'une calibration chimique telle que décrite dans la publication FR3063543). Le signal représentatif de l'indice optique local d'un milieu gazeux est volontairement variable pour augmenter la robustesse du réseau neuronal et pour assurer son acuité.

Le procédé de contrôle de fabrication 200 de l'invention comprend en outre une étape d'analyse 210 des échantillons capturés par le dispositif 120. De l'empreinte fournie par le dispositif 120 et les données extraites représentées dedans, on extrait les caractéristiques qui alimentent un algorithme de classification des COV selon des propriétés physico-chimiques. Les caractéristiques mentionnées ici peuvent inclure, sans limitation, les caractéristiques des mélanges collants, des mélanges de-cohésifs, l'ajout d'eau aux mélanges et le vieillissement des mélanges.

Dans les modes de réalisation du système 100 incorporant le multiplexeur 146, cette étape comprend une étape d'analyse de multiples composés cibles dans chaque échantillon avant l'analyse réalisée par le dispositif 120.

Le procédé de contrôle de fabrication 200 de l'invention comprend en outre une étape de construction du modèle de profils olfactifs sur la base des propriétés physico-chimiques du mélange caoutchouteux identifié. Pour réaliser la construction du modèle de profils olfactifs, cette étape comprend une étape d'introduction 214 au réseau neuronal des propriétés physico-chimiques du mélange caoutchouteux identifié, cette étape étant réalisée par le système 100. Pendant cette étape, des propriétés physico-chimiques du mélange caoutchouteux identifié sont obtenues par le dispositif 120. Les propriétés physico-chimiques obtenues comprennent des données correspondantes à l'empreinte fournie par le dispositif 120. Ces données sont enregistrées (par exemple, dans une ou des bases de données 150 du système 100) (voir la Figure 3), et elles sont mises à jour pendant la durée du procédé de contrôle de fabrication sur une base continue ou sur une base intermittente.

L'étape d'introduction 214 comprend une étape de création d'une base de référence (ou « base ») 215 des propriétés physico-chimiques qui est introduite dans le modèle de profils olfactifs. Les propriétés physico-chimiques correspondent aux profils olfactifs des échantillons capturés par les capteurs du dispositif 120. Cette étape comprend une étape de création d'une référence des profils olfactifs cherchés dans l'air ambiant capturé par le dispositif 120. La référence des profils olfactifs qui est créée pendant cette étape comprend des profils olfactifs attendues correspondant aux profils olfactifs connus des mélanges caoutchouteux en cours de production à l'installation de production 110. Cette étape peut être réalisée en avance d'autres étapes du procédé pour alimenter le réseau neuronal les vrais profils olfactifs attendus en analysant l'air ambiant capturée pendant plusieurs cycles de mélangeage.

La base de référence créée peut comprendre au moins une base de référence déjà créée (par exemple, un tableau de COV de mélanges caoutchouteux variés discuté ci-dessus). La base peut inclure des paramètres correspondants à une pluralité de recettes de mélanges caoutchouteux connues (y compris des paramètres qui font partie de l'information générale). Dans des modes de réalisation du procédé 200, au moins une partie de la référence des profils olfactifs est créée par un ou des hommes du métier (par exemple, pendant un enregistrement des données capturées dans l'air ambiant d'autres installations produisant un mélange similaire au mélange M sortant de l'installation de production 110).

Le procédé de contrôle de fabrication 200 de l'invention comprend en outre une étape d'entrainement 216 du modèle de profils olfactifs. Pendant cette étape, une méthode d'apprentissage automatique prend en entrée les profils olfactifs obtenus du mélange caoutchouteux ainsi que les données de la base d'apprentissage créée. Après que le système 100 a obtenu les profils olfactifs du mélange caoutchouteux identifié, le processeur peut récupérer ses propriétés physico-chimiques connus correspondant pour construire le modèle de profils olfactifs.

Dans un mode de réalisation, la méthode d'apprentissage automatique employée pendant l'étape d'entrainement 216 comprend une méthode d'apprentissage supervisé. La méthode d'apprentissage supervisé peut comprendre l'entrainement d'un ou des réseaux neuronaux comme discuté ci-dessus.

Ainsi, le modèle de profils olfactifs sortant sera l'identification des propriétés physico-chimiques du mélange

caoutchouteux en cours de production à l'installation de production 110 (caractérisé, par exemple, par l'atteinte des propriétés souhaitées du mélange à un temps prédéterminé). Ceci permet, par exemple, d'effectuer des actions préventives pour assurer l'obtention d'un mélange caoutchouteux ayant les propriétés souhaitées. A titre d'exemple, dans certains cas d'usage, une fois l'apprentissage réalisé, le système 100 peut estimer le collant produit à partir d'une empreinte olfactive et d'autres données de base (par exemple, la température et l'humidité).

Dans des modes de réalisation du procédé de contrôle de fabrication 200 de l'invention, le procédé comprend en outre une étape de comparaison 218. Pendant cette étape, l'identification des propriétés physico-chimiques du mélange M sortant du moyen de mélangeage 112, ressorti du modèle de profils olfactifs, est comparé au profil olfactif du mélange identifié, de sorte que le système 100 puisse ajuster l'installation de production 110 où les propriétés souhaitées du mélange M ne sont pas atteintes. Dans ces cas, le procédé 200 comprend en outre une étape de commande 220 d'ajustement d'au moins un élément de l'installation de production 110. Pendant cette étape, la commande d'ajustement est envoyée au sous-système 130 pour gérer l'installation de production 110 (par exemple, pour déclencher les capteurs du sous-système 130 de sorte que la vitesse des vis de l'extrudeuse est ralentie).

Pendant cette étape, le système 100 met à jour les données entrantes (voir la base de données 221) pour aider le partage des informations sur les propriétés physico-chimiques des mélanges caoutchouteux à un site de production incorporant l'installation de production 110 (y compris des opérateurs du site incorporant l'installation de production 110). Le système 100 met en œuvre le procédé 200 de l'invention en utilisant des données de mesure des COV "stockées" et les données « mises à jour » pour préparer des rappels personnalisés à envoyer à l'installation de production 110 (ou à un site incorporant l'installation de production 110 ou à un ou des opérateurs du site incorporant l'installation de production 110) et pour prévoir l'atteinte des propriétés souhaitées du mélange. Dans ce mode de réalisation, le système 100 peut proposer des ajustements de paramètres du cycle de mélangeage pour améliorer le mélange caoutchouteux sortant de l'installation de production 110.

Tel qu'utilisé ici, "opérateur" ou « utilisateur » se réfère à un seul opérateur ou à un groupe d'opérateurs. Un opérateur comprend, sans s'y limiter, un participant individuel dans une tâche d'un cycle de mélangeage réalisé par l'installation de production 110, un membre individuel d'une équipe ou d'un groupe qui participe à un cycle de mélangeage, une ou plusieurs machines associées à un individuel ou une équipe qui participe à au moins une tâche d'un cycle de mélangeage, une communauté numérique associée à un cycle de mélangeage et des combinaisons et équivalents de ceux-ci. L'opérateur peut être un spectateur qui assiste à un cycle de mélangeage, en totalité ou en partie, physiquement ou virtuellement (par exemple, en gérant à distance une opération prédéterminée en direct afin de voir l'installation de production 110 en temps réel). Tel qu'utilisé ici, "opérateur" peut également se référer à tout système ou appareil électronique configuré pour recevoir une entrée de commande et configuré pour envoyer automatiquement des données à au moins un autre opérateur.

Dans les modes de réalisation du procédé 200 de l'invention, le procédé 200 comprend en outre une étape de simulation d'un nombre de mélanges permettant de réaliser les produits caoutchouteux ayant des propriétés physico-chimiques prédéterminées. Chaque simulation fait l'objet par la suite d'une prédiction de profil olfactif d'un mélange caoutchouteux ayant des propriétés physico-chimiques attendues via un modèle de profils olfactifs comme décrit ci-dessus pour obtenir finalement une distribution de prévision de profils olfactifs pour les propriétés physico-chimiques identifiés.

Le système 100 de l'invention est donc basé sur un ou des réseaux de neurones dont le fondement est d'être entrainé sur un grand nombre de situations (par exemple, des échantillons de l'air ambiant) pour ensuite pouvoir décrire un nouveau mélange caoutchouteux qui lui serait présentée. D'une part, il faut expliquer au réseau neuronal ce qu'il doit reconnaitre, et puis les lui faire apprendre (« annotation »). D'autre part, il faut jauger la performance du réseau neuronal et proposer des échantillons pertinents pour éviter de tomber dans certains biais comme le surentrainement qui vont diminuer la performance du réseau. Ainsi, le principe du système 100 est d'effectuer simplement ce que l'on pourrait considérer comme une différence entre les éléments marqueurs de l'air ambiant et les éléments mesurés. Les effets de la pollution environnementale sont supprimés mathématiquement.

Il est envisageable qu'une ou des étapes du procédé puissent être réalisées de manière itérative.

## EXEMPLE

Grâce à des données de référence (ici le collant et la modélisation olfactive), un réseau de neurones déjà entrainé à minima peut donc déterminer le niveau de collant en fonction des données SPR et/ou des données interféromètre MZ. En considérant le niveau de collant des mélanges dans les ateliers de fabrication, les propriétés d'une composition des mélanges influencent ce niveau, notamment :

- Le ratio du taux de charge renforçante et le taux de plastifiant, ce ratio indiquant un mélange plus collant en fonction de l'abaissement du ratio.
- Le ratio de résine dans le mélange, ce ratio indiquant un mélange plus collant en fonction de l'augmentation du ratio.

- La fraction volumique d'élastomère qui indique un mélange plus collant en fonction d'abaissement de la fraction volumique.

On considère aussi la caractéristique de l'élastomère qui peut entrer dans la composante du collant des mélanges. Dans cet exemple, on considère un Mooney ML1+4 100°C d'élastomère sec <50points, ou la présence d'isoprène. Le Mooney, également connu sous les noms de viscosité ou plasticité, caractérise, d'une manière connue, des substances solides. On utilise un consistomètre oscillant tel que décrit dans la norme ASTM D1646 standard (1999). Cette mesure de plasticité est effectuée selon le principe suivant: l'échantillon analysé à l'état brut (à savoir, avant cuisson) est moulée (formée) dans une enceinte cylindrique chauffée à une température donnée (par exemple 35°C ou. 100°C). Après une minute de préchauffage, le rotor tourne au sein de l'éprouvette à 2 tours/minute et le couple utile pour entretenir ce mouvement est mesuré pendant 4 minutes de rotation. La viscosité Mooney (ML 1 + 4) est exprimée en "unité Mooney"(avec 1UM=0,83 Nm) et correspond à la valeur obtenue à la fin des 4 minutes

Le terme « collant » définit une propriété d'un mélange de caoutchouc qui varie suivant les formulations des mélanges. Un mélange très collant n'est pas forcément un mélange « extrême » sur un des critères, mais c'est l'association de tous les critères qui donne son collant et donc sa difficulté de réalisation. En multipliant ces critères, un « indice de collant » est donc trouvé et représenté par le tableau en dessous :

[Tableau. 1]

| 1 - Ratio Noir/Plastifiant | | | | | | | | | | | |
|---|---|---|---|---|---|---|---|---|---|---|---|
| Noir/Plastifiant indice | 150.38 | 140.30 | 130.23 | 120.15 | 110.08 | 100.00 | 89.92 | 79.85 | 69.77 | 59.70 | 49.62 |
| Valeur de sévérité | 1 | 1.10 | 1.20 | 1.30 | 1.40 | 1.50 | 1.60 | 1.70 | 1.80 | 1.90 | 2.00 |
| 2 - Présence Résine | | | | | | | | | | | |
| Résine tackifiante indice | 0.00 | 20.00 | 40.00 | 60.00 | 80.00 | 100.00 | 120.00 | 140.00 | 160.00 | 180.00 | 200.00 |
| Valeur de sévérité | 1 | 1.10 | 1.20 | 1.30 | 1.40 | 1.50 | 1.60 | 1.70 | 1.80 | 1.90 | 2.00 |
| 3 - Cohésion Mélange | | | | | | | | | | | |
| Fraction volumique d’élastomère indice | 143 | 134 | 126 | 117 | 109 | 100 | 91 | 83 | 74 | 66 | 57 |
| Valeur de sévérité | 1 | 1.10 | 1.20 | 1.30 | 1.40 | 1.50 | 1.60 | 1.70 | 1.80 | 1.90 | 2.00 |

De façon empirique et suivant différents critères de faisabilité industrielle, un bilan est réalisé sur la faisabilité industrielle de plusieurs mélanges. La limite de faisabilité est établie pour des indices de collant au-dessus de 3.5 et 4.5 points.

Exemples de mélanges :

[Tableau.2]

| | M Collant | M Collant bis | M non collant |
|---|---|---|---|
| 1 – Ratio Noir/Plastifiant | | | |
| Noir/Plastifiant indice | 94.7 | 75.2 | 117.3 |
| Valeur de sévérité | 1.55 | 1.75 | 1.33 |
| 2 – Présence Résine | | | |
| Résine tackifiante indice | 132.0 | 112.0 | 20.0 |
| Valeur de sévérité | 1.66 | 1.56 | 1.10 |
| 3 – Cohésion Mélange | | | |
| Fraction volumique d'élastomère indice | 67.2 | 85.4 | 99.4 |
| Valeur de sévérité | 1.88 | 1.67 | 1.50 |
| **Indice de collant** | **4.9** | **4.5** | **2.2** |

La mesure du collant d'un mélange caoutchouteux est indispensable lors de la fabrication de certains produits caoutchouteux. A titre d'exemple, pour des produits semi-finis fabriqués dans le domaine de production de pneumatiques, le collant détermine la solidité de l'assemblage de l'enveloppe et la cohésion des produits lors de la conformation.

**EXEMPLE**

Des tests de détectabilité des COV émanant des éléments crus d'un pneumatique ont été réalisés à l'aide d'un nez électronique. Les mesures ont été réalisées dans un environnement propre (contrairement à un environnement d'atelier de mélangeage souvent hautement perturbé par le mélange des COV des composés traités). Les mesures ont été reprises par la mise en œuvre de règles strictes afin d'objectiver les mesures et d'éviter la pollution irréversible des fluidiques de l'appareil de mesure :

- Un nettoyage régulier et complet de l'appareil entre chaque mesure ;
- Une campagne de mesure par type de composant pour éviter des réactions croisées ;
- Un stockage sous vide et séparé des familles de composants pour éviter des pollutions croisées ; et
- L'utilisation de tube à essai à usage unique...

La majorité des tests ont été réalisée à température ambiante (à laquelle la majorité de composés sont mesurables sans avoir recours à une mise en température de l'échantillon).

Lors des mesures, plusieurs cas se sont présentés :

[Tableau.3]

| | |
|---|---|
| **Sans saturation à T° Ambiante** | La signature à température ambiante se situe entre 0 et 1. |
| | Les mesures sont répétables et avec peu dispersions. |
| | Il est alors possible de réaliser une mesure à 50°C pour obtenir une signature plus franche mais un risque de saturation est non négligeable. |
| **Saturation à T° Ambiante** | La signature à température ambiante arrive presque à saturation d'un ou plusieurs des biocapteurs. La mesure à 50°C n'est pas nécessaire voire déconseillé pour éviter une pollution profonde du capteur. Dans ce cas, les essais à 50 °C n'ont pas été réalisé pour préserver l'appareil de mesure. |
| **Non détection à T° Ambiante** | La signature à température ambiante n'est pas détectée (les COVs sont trop faibles pour être mesurés). Des mesures à plus forte température sont donc nécessaires pour augmenter l'émanation des COVs donc leurs détectabilités. |

Les mesures ont été réalisées sur 23 matériaux représentants une diversité de familles de produits crus.

[Tableau.4]

| Mesures des blocs vulcanisants | | |
|---|---|---|
| Nom | Signature à Température Ambiante (°C) | Signature à Température à 50°C |
| A | Bonne | Saturation |
| B | Bonne | Saturation |
| C | Non détecté | Bonne |
| D | Non détecté | Bonne |
| E | Bonne | Très forte |
| F | Bonne | Saturation |
| G | Bonne | Saturation |
| H | Bonne | Saturation |
| I | Bonne | Saturation |
| J | Assez faible | Bonne |
| K | Non détecté | Bonne |

[Tableau.5]

| Mesures des vulcanisants | | |
|---|---|---|
| Nom | Signature à Température Ambiante (°C) | Signature à Température à 50°C |
| Soufre | Non détecté | Très faible |
| CBS | Bonne | Saturation |

[Tableau.6]

| Mesures des caoutchoucs naturels | | |
|---|---|---|
| Nom | Signature à Température Ambiante (°C) | Signature à Température à 50°C |
| GP20837NR | Assez faible | Bonne |

[Tableau.7]

| Mesures des caoutchoucs artificiels | | |
|---|---|---|
| Nom | Signature à Température Ambiante (°C) | Signature à Température à 50°C |
| SBR7121 | Assez faible | Bonne |

[Tableau.8]

| Mesures des additifs standards | | |
|---|---|---|
| Nom | Signature à Température Ambiante (°C) | Signature à Température à 50°C |
| Silice | Non détecté | Moyenne |
| Noir de carbone | Non détecté | Moyenne |

[Tableau.8]

| Mesures des agents de renforcement | | |
|---|---|---|
| Nom | Signature à Température Ambiante (°C) | Signature à Température à 50°C |
| Silane Si69 | Bonne | Saturation |

[Tableau.9]

| Mesures des plastifiants | | |
|---|---|---|
| Nom | Signature à Température Ambiante (°C) | Signature à Température à 50°C |
| Résine 9052 | Moyenne | Saturation |
| Huile minérale | Non détecté | Moyenne |

[Tableau.10]

| Mesures des renforts textiles | | |
|---|---|---|
| Nom | Signature à Température Ambiante (°C) | Signature à Température à 50°C |
| Fil textile | Très faible | Moyenne |

[Tableau.11]

| Mesures des antioxydants | | |
|---|---|---|
| Nom | Signature à Température Ambiante (°C) | Signature à Température à 50°C |
| CMR | Moyenne | Saturation |

[Tableau. 12]

| Mesures des poudrettes | | |
|---|---|---|
| Nom | Signature à Température Ambiante (°C) | Signature à Température à 50°C |
| Poudrette gomme intérieure | Très faible | Moyenne |

Les tests réalisés montrent la pertinence d'utiliser un appareil de type nez électronique dans le domaine industriel incorporant la production et l'utilisation de caoutchouc. Les composés sont détectables, et les signatures olfactives résultantes sont différenciantes. Ainsi, de nombreux cas d'usages peuvent être imaginés, y compris, sans limitation, les usage suivants :

- Détection de la présence de sel de cobalt (détection différentes cendres) ;
- Détection d'humidité dans les COV après pulvérisation ;

- Détection de pollution des tampons butyl/non butyl ;
- Détection de changement de mélanges en calandre ;
- Détection de grattonnage ;
- Evaluation de vieillissement d'un mélange ;
- Aide à l'évaluation d'état du poussée / poussant ;
- Détection de fuite membrane en cuisson ;
- Détection de composant vulcanisant ;
- Détection d'incendie ; et
- Evaluation de l'état d'un mélange à la production

Grâce au système 100 et son utilisation des techniques de capture des ligands par peptides par le dispositif 120, l'invention divulguée est performante et aussi souple et adaptable au cas par cas si besoin ou si les conditions opératoires devaient évoluer. Le système 100 est donc adaptée pour des produits caoutchouteux composés d'une variété de mélanges de caoutchouc. De ce fait, l'invention prend en compte la qualité des paramètres mesurés et analysés pour assurer la qualité des produits caoutchouteux obtenus.

Un cycle du procédé de contrôle de fabrication de l'invention peut être fait par la commande du PLC et peut inclure des pré-programmations des informations de gestion. Par exemple, un réglage de procédé peut être associé avec les propriétés souhaitées d'un mélange produit par l'installation de production 110, y compris les propriétés du moyen de mélangeage 112, les propriétés des matières premières entrant dans le moyen de mélangeage et les propriétés du mélange sortant du moyen de mélangeage.

Dans des modes de réalisation de l'invention, le système 100 (et/ou un site incorporant le système 100) peut recevoir des commandes vocales ou d'autres données audio représentant, pour exemple, une démarche ou un arrêt de capture d'échantillons de l'air ambiant entrant dans le dispositif 120. La demande peut inclure une demande pour l'état actuel d'un cycle de mélangeage réalisé par l'installation de production 110. Une réponse générée peut être représentée de manière audible, visuelle, tactile (par exemple, en utilisant une interface haptique), virtuelle et/ou augmentée.

Pour toutes les réalisations du système 100, un système de surveillance pourrait être mis en place. Au moins une partie du système de surveillance peut être fournie dans un dispositif portable tel qu'un dispositif de réseau mobile (par exemple, un téléphone mobile, un ordinateur portable, un ou des dispositifs portables connectés au réseau (y compris des dispositifs « réalité augmentée » et/ou « réalité virtuelle », des vêtements portables connectés au réseau et/ou toutes combinaisons et/ou tous équivalents).

Le système 100 permet une mesure en continue des mélanges caoutchouteux issus des cycles de mélangeages et un contrôle non-destructif qui supprime l'effet opérateur. Le système 100 de l'invention rend la mesure des caractéristiques physico-chimiques plus objective dans le sens qu'il évite la prise d'échantillons des caoutchoucs et rend une mesure répétable.

Les termes « au moins un(e) » et « un(e) ou plusieurs » sont utilisés de manière interchangeable. Les gammes qui sont présentées comme se situant « entre a et b » englobent les valeurs « a » et « b ».

Bien que des modes de réalisation particuliers de l'appareil révélé aient été illustrés et décrits, on comprendra que divers changements, additions et modifications peuvent être pratiqués sans s'écarter de la portée du présent exposé. Par conséquent, aucune limitation ne devrait être imposée sur la portée de l'invention décrite à l'exception de celles exposées dans les revendications annexées.

## Revendications

**1.** Un procédé (200) de contrôle de fabrication de produits caoutchouteux réalisé par un système (100) de fabrication de produits caoutchouteux comprenant une installation de production (110) ayant au moins un moyen de mélangeage (112) qui met en œuvre des étapes successives de mélangeage d'un mélange caoutchouteux, **caractérisé en ce que** le procédé comprend les étapes suivantes :

- une étape de démarrage (202) d'un cycle de mélangeage réalisé à l'installation de production (110);
- une étape de capture (204) d'air ambiant autour de l'installation de production (110) pour obtenir au moins un échantillon gazeux pendant le cycle de mélangeage, cette étape étant réalisée par un dispositif (120) de détection d'odeur du système (100) qui reconnaît la présence des composés organiques volatiles odorants, COV, présents dans l'air ambiant reçu dans le dispositif (120) en capturant des ligands associés aux COV à détecter ;
- une étape de détection de profils olfactifs présents dans l'air ambiant et capturés par le dispositif (120) par moyens d'une ou des techniques de capture de ligands choisie parmi au moins une entre :
- une ou des techniques de la résonance plasmonique de surface, SPR ; et
- une ou des techniques de l'interférométrie Mach-Zehnder, MZ ;

- une étape d'identification (208) d'un profil olfactif pour identifier un mélange (M) sortant du moyen de mélangeage (112) et son état de production, cette étape étant réalisée à partir d'au moins un échantillon de l'air ambiant capturée par le dispositif (120);
- une étape d'analyse (210) des échantillons capturés par le dispositif (120) à partir d'une ou des empreintes ($E_A$, $E_B$) fournies par le dispositif (120) et les données extraites représentées dedans;
- une étape de construction d'au moins un modèle de profils olfactifs à partir des propriétés physico-chimiques du mélange caoutchouteux identifié, cette étape comprenant une étape d'introduction (214) à un réseau neuronal des propriétés physico-chimiques du mélange caoutchouteux identifié, cette étape étant réalisée par le système (100) ; et
- une étape d'entrainement (216) du modèle de profils olfactifs à partir des profils olfactifs du mélange caoutchouteux identifié;

de sorte que le modèle de profils olfactifs sortant sera l'identification des propriétés physico-chimiques du mélange caoutchouteux en cours de production à l'installation de production (110).

**2.** Le procédé (200) de la revendication 1, dans lequel l'étape de construction du modèle de profils olfactifs comprend une étape de création d'une référence des profils olfactifs cherchés dans l'air ambiant capturé par le dispositif (120).

**3.** Le procédé (200) de la revendication 2, dans lequel l'étape d'introduction (214) de l'étape de construction du modèle de profils olfactifs comprend une étape de création d'une base d'apprentissage (215) des propriétés physico-chimiques qui est introduite dans le modèle de profils olfactifs.

**4.** Le procédé (200) de l'une quelconque des revendications 1 à 3, comprenant en outre une étape de comparaison (218) pendant laquelle l'identification des propriétés physico-chimiques du mélange (M) sortant du moyen de mélangeage (112), ressorti du modèle de profils olfactifs, est comparé au profil olfactif du mélange identifié, de sorte que le système (100) puisse ajuster l'installation de production (110) où les propriétés souhaitées du mélange (M) ne sont pas atteintes.

**5.** Le procédé (200) de la revendication 4, comprenant en outre une étape de commande (220) d'ajustement de l'installation de production (110) pour prévoir l'atteinte des propriétés souhaitées du mélange (M) sortant du moyen de mélangeage (112).

**6.** Le procédé (200) de la revendication 5, dans lequel l'étape de commande (220) d'ajustement de l'installation de production (110) comprend une étape de détermination d'un niveau de collant du mélange (M) à partir d'une empreinte ($E_{A,}E_B$) fournie par le dispositif (120).

**7.** Le procédé (200) de l'une quelconque des revendications 1 à 6, dans lequel, pendant l'étape d'entrainement (216) du modèle de profils olfactifs, le système (100) emploie une méthode d'apprentissage choisie entre une méthode d'apprentissage automatique et une méthode d'apprentissage progressif.

**8.** Le procédé (200) de l'une quelconque des revendications 1 à 7, dans lequel :

- l'étape de détection de profils olfactifs comprend une étape de suppression d'une pollution COV de l'air ambiant reçu par le dispositif (120), cette étape réalisée par un filtre (140) du système (100) avant l'entrée de l'air ambiant dans le dispositif (120) ;
- l'étape d'identification (208) d'un profil olfactif comprend une étape de diminution de l'humidité et/ou de la température dans l'air ambiant reçu par le dispositif (120), cette étape étant réalisée par un condenseur (144) du système (100) ; et
- l'étape d'analyse (210) des échantillons capturés par le dispositif (120) comprend en outre une étape d'analyse de profils olfactifs dans les échantillons avant l'analyse réalisée par le dispositif (120), cette étape étant réalisée par un multiplexeur (146) du système (100).

**9.** Le procédé (200) de l'une quelconque des revendications 1 à 8, dans lequel l'étape de démarrage (202) d'un cycle de mélangeage comprend une étape d'introduction, dans le moyen de mélangeage (112), des matières premières nécessaires à la réalisation de la production du mélange (M).

**10.** Le procédé (200) de l'une quelconque des revendications 1 à 8, dans lequel l'étape de démarrage (202) d'un cycle de mélangeage comprend une étape d'introduction, dans le moyen de mélangeage (112), d'un ou des masterbatchs.

**11.** Le procédé (200) de l'une quelconque des revendications 1 à 10, comprenant en outre une étape de simulation d'un nombre de mélanges permettant de réaliser au moins un mélange (M) caoutchouteux ayant des propriétés physico-chimiques prédéterminées.

**12.** Un système (100) de fabrication de produits caoutchouteux qui est configuré pour réaliser le procédé (200) de contrôle de fabrication de produits caoutchouteux selon les revendications de 1 à 11, **caractérisé en ce que** le système (100) comprend :

- une installation de production (110) qui met en œuvre des étapes successives de mélangeage, l'installation de production comprenant au moins un moyen de mélangeage (112) duquel un ou des mélanges (M) caoutchouteux sortent;
- un dispositif (120) de détection d'odeur qui capture un air ambiant autour de l'installation de production (110) pour obtenir au moins un échantillon gazeux pendant le cycle de mélangeage ; et

  - un sous-système de contrôle (130) qui emploie un modèle de profils olfactifs à partir des caractéristiques physico-chimiques des mélanges caoutchouteux reconnus par moyens d'une ou des techniques de capture de ligands choisie parmi au moins une entre :

- une ou des techniques de la résonance plasmonique de surface, SPR ; et
- une ou des techniques de l'interférométrie Mach-Zehnder, MZ; de sorte que le dispositif (120) reconnaît la présence des composés organiques volatiles odorants, COV, présents dans l'air ambiant capturé en capturant des ligands associés aux COV à détecter; et

de sorte que le modèle de profils olfactifs apprend les propriétés physico-chimiques des COV associées avec les mélanges (M) sortant du moyen de mélangeage (112) pendant les cycles de production de produits caoutchouteux réalisés par l'installation de production (110).

**13.** Le système (100) de la revendication 12, dans lequel le sous-système (130) comprend un ou des capteurs qui déclenchent lorsque le modèle de profils olfactifs sortant indique un décalage entre les propriétés physico-chimiques du mélange (M) en cours de production à l'installation de production (110) et les propriétés physico-chimiques attendues.

**14.** Le système (100) de la revendication 13, dans lequel le sous-système (130) ajuste le fonctionnement de l'installation de production (110) en réponse aux capteurs déclenchés pour obtenir un niveau de collant du mélange (M) à partir d'une empreinte ($E_A$, $E_B$) fournie par le dispositif (120).

**15.** Le système (100) de l'une quelconque des revendications 12 à 14, dans lequel le moyen de mélangeage (112) est choisi parmi une ou des extrudeuses et/ou un ou des mélangeurs internes.

**Patentansprüche**

**1.** Verfahren (200) zur Steuerung der Herstellung von Kautschukprodukten, das von einem System (100) zur Herstellung von Kautschukprodukten ausgeführt wird, das eine Produktionsanlage (110) umfasst, die mindestens eine Mischeinrichtung (112) aufweist, die aufeinander folgende Schritte des Mischens einer Kautschukmischung durchführt, **dadurch gekennzeichnet, dass** das Verfahren die folgenden Schritte umfasst:

- einen Schritt des Startens (202) eines Mischzyklus, der in der Produktionsanlage (110) ausgeführt wird;
- einen Schritt des Erfassens (204) von Umgebungsluft um die Produktionsanlage (110) herum, um mindestens eine gasförmige Probe während des Mischzyklus zu erhalten, wobei dieser Schritt von einer Vorrichtung (120) zur Geruchsdetektion des Systems (100) ausgeführt wird, die das Vorhandensein der geruchsbehafteten flüchtigen organischen Verbindungen, VOC, die in der in der Vorrichtung (120) aufgenommenen Umgebungsluft vorhanden sind, detektiert, indem sie den zu detektierenden VOC zugeordnete Liganden erfasst;
- einen Schritt des Detektierens von olfaktorischen Profilen, die in der Umgebungsluft vorhanden sind und von der Vorrichtung (120) erfasst werden, mittels einer oder mehrerer Ligandenerfassungstechniken, die mindestens ausgewählt sind aus:
- einer oder mehreren Techniken der Oberflächenplasmonenresonanz, SPR; und
- einer oder mehreren Techniken der Mach-Zehnder-Interferometrie, MZ;

- einen Schritt des Identifizierens (208) eines olfaktorischen Profils, um eine aus der Mischeinrichtung (112) hervorgehende Mischung (M) und ihren Produktionszustand zu identifizieren, wobei dieser Schritt ausgehend von mindestens einer Probe der von der Vorrichtung (120) erfassten Umgebungsluft ausgeführt wird;
- einen Schritt des Analysierens (210) der von der Vorrichtung (120) erfassten Proben ausgehend von einem oder mehreren von der Vorrichtung (120) bereitgestellten Abdrücken ($E_A$, $E_B$) und den darin dargestellten extrahierten Daten;
- einen Schritt des Erstellens mindestens eines Modells olfaktorischer Profile ausgehend von den physikalisch-chemischen Eigenschaften der identifizierten Kautschukmischung, wobei dieser Schritt einen Schritt des Eingebens (214) der physikalisch-chemischen Eigenschaften der identifizierten Kautschukmischung in ein neuronales Netzwerk umfasst, wobei dieser Schritt von dem System (100) ausgeführt wird; und
- einen Schritt des Trainierens (216) des Modells olfaktorischer Profile ausgehend von den olfaktorischen Profilen der identifizierten Kautschukmischung;

so dass das hervorgehende Modell olfaktorischer Profile die Identifikation der physikalisch-chemischen Eigenschaften der Kautschukmischung ist, die gerade in der Produktionsanlage (110) produziert wird.

2. Verfahren (200) nach Anspruch 1, wobei der Schritt des Erstellens des Modells olfaktorischer Profile einen Schritt des Erzeugens einer Referenz der olfaktorischen Profile umfasst, die in der von der Vorrichtung (120) erfassten Umgebungsluft gesucht werden.

3. Verfahren (200) nach Anspruch 2, wobei der Schritt des Eingebens (214) des Schritts des Erstellens des Modells olfaktorischer Profile einen Schritt des Erzeugens einer Lerndatenbank (215) mit den physikalisch-chemischen Eigenschaften umfasst, die in das Modell olfaktorischer Profile eingegeben wird.

4. Verfahren (200) nach einem der Ansprüche 1 bis 3, umfassend ferner einen Schritt des Vergleichens (218), während dessen die Identifikation der physikalisch-chemischen Eigenschaften der aus der Mischeinrichtung (112) hervorgehenden Mischung (M), die sich aus dem Modell olfaktorischer Profile ergibt, mit dem olfaktorischen Profil der identifizierten Mischung verglichen wird, so dass das System (100) die Produktionsanlage (110) anpassen kann, wenn die gewünschten Eigenschaften der Mischung (M) nicht erreicht werden.

5. Verfahren (200) nach Anspruch 4, umfassend ferner einen Schritt des Steuerns (220) der Anpassung der Produktionsanlage (110), um das Erreichen der gewünschten Eigenschaften der aus der Mischeinrichtung (112) hervorgehenden Mischung (M) vorzusehen.

6. Verfahren (200) nach Anspruch 5, wobei der Schritt des Steuerns (220) der Anpassung der Produktionsanlage (110) einen Schritt des Bestimmens eines Klebrigkeitsniveaus der Mischung (M) ausgehend von einem von der Vorrichtung (120) bereitgestellten Abdruck ($E_A$, $E_B$) umfasst.

7. Verfahren (200) nach einem der Ansprüche 1 bis 6, wobei das System (100) während des Schritts des Trainierens (216) des Modells olfaktorischer Profile eine Lernmethode einsetzt, die aus einer Methode des maschinellen Lernens einer Methode des schrittweisen Lernens ausgewählt ist.

8. Verfahren (200) nach einem der Ansprüche 1 bis 7, wobei:

- der Schritt des Detektierens von olfaktorischen Profilen einen Schritt des Beseitigens einer VOC-Verunreinigung der von der Vorrichtung (120) aufgenommenen Umgebungsluft umfasst, wobei dieser Schritt von einem Filter (140) des Systems (100) vor dem Eintreten der Umgebungsluft in die Vorrichtung (120) ausgeführt wird;
- der Schritt des Identifizierens (208) eines olfaktorischen Profils einen Schritt des Verringerns der Feuchtigkeit und/oder der Temperatur in der von der Vorrichtung (120) aufgenommenen Umgebungsluft umfasst, wobei dieser Schritt von einem Kondensator (144) des Systems (100) ausgeführt wird; und
- der Schritt des Analysierens (210) der von der Vorrichtung (120) erfassten Proben ferner einen Schritt des Analysierens von olfaktorischen Profilen in den Proben vor der von der Vorrichtung (120) ausgeführten Analyse umfasst, wobei dieser Schritt von einem Multiplexer (146) des Systems (100) ausgeführt wird.

9. Verfahren (200) nach einem der Ansprüche 1 bis 8, wobei der Schritt des Startens (202) eines Mischzyklus einen Schritt des Eingebens der für die Ausführung der Produktion der Mischung (M) erforderlichen Rohstoffe in die Mischeinrichtung (112) umfasst.

**10.** Verfahren (200) nach einem der Ansprüche 1 bis 8, wobei der Schritt des Startens (202) eines Mischzyklus einen Schritt des Eingebens eines oder mehrerer Masterbatches in die Mischeinrichtung (112) umfasst.

**11.** Verfahren (200) nach einem der Ansprüche 1 bis 10, umfassend ferner einen Schritt des Simulierens einer Anzahl von Mischungen, der es ermöglicht, mindestens eine Kautschukmischung (M) auszuführen, die vorbestimmte physikalisch-chemische Eigenschaften aufweist.

**12.** System (100) zur Herstellung von Kautschukprodukten, das dazu ausgelegt ist, das Verfahren (200) zur Steuerung der Herstellung von Kautschukprodukten nach den Ansprüchen 1 bis 11 auszuführen, **dadurch gekennzeichnet, dass** das System (100) umfasst:

- eine Produktionsanlage (110), die aufeinander folgende Schritte des Mischens durchführt, wobei die Produktionsanlage mindestens eine Mischeinrichtung (112) umfasst, aus der eine oder mehrere Kautschukmischungen (M) hervorgehen;
- eine Vorrichtung (120) zur Geruchsdetektion, die eine Umgebungsluft um die Produktionsanlage (110) herum erfasst, um mindestens eine gasförmige Probe während des Mischzyklus zu erhalten; und
- ein Steuerungsteilsystem (130), das ein Modell olfaktorischer Profile ausgehend von den physikalisch-chemischen Eigenschaften der Kautschukmischungen verwendet, die mittels einer oder mehrerer Ligandenerfassungstechniken erkannt werden, die mindestens ausgewählt sind aus:
- einer oder mehreren Techniken der Oberflächenplasmonenresonanz, SPR; und
- einer oder mehrerer Techniken der Mach-Zehnder-Interferometrie, MZ; so dass die Vorrichtung (120) das Vorhandensein von geruchsbehafteten flüchtigen organischen Verbindungen, VOC, erkennt, die in der erfassten Umgebungsluft vorhanden sind, indem die den zu detektierenden VOC zugeordneten Liganden erfasst werden; und so, dass das Modell olfaktorischer Profile die physikalisch-chemischen Eigenschaften der VOC, die den aus der Mischeinrichtung (112) hervorgehenden Mischungen (M) zugeordnet sind, während der von der Produktionsanlage (110) ausgeführten Produktionszyklen von Kautschukprodukten lernt.

**13.** System (100) nach Anspruch 12, wobei das Teilsystem (130) einen oder mehrere Sensoren umfasst, die auslösen, wenn das hervorgehende Modell olfaktorischer Profile eine Diskrepanz zwischen den physikalisch-chemischen Eigenschaften der Mischung (M), die gerade in der Produktionsanlage (110) produziert wird, und den erwarteten physikalisch-chemischen Eigenschaften anzeigt.

**14.** System (100) nach Anspruch 13, wobei das Teilsystem (130) den Betrieb der Produktionsanlage (110) als Reaktion auf die ausgelösten Sensoren anpasst, um ein Klebrigkeitsniveau der Mischung (M) ausgehend von einem von der Vorrichtung (120) bereitgestellten Abdruck ($E_A$, $E_B$) zu erhalten.

**15.** System (100) nach einem der Ansprüche 12 bis 14, wobei die Mischeinrichtung (112) aus einem oder mehreren Extrudern und/oder einem oder mehreren internen Mischern ausgewählt ist.

## Claims

**1.** Method (200) for controlling the manufacture of rubber products produced by a rubber products manufacturing system (100) comprising a production plant (110) having at least one mixing means (112) that implements successive steps of mixing a rubber compound, **characterised in that** the method comprises the following steps:

- a starting step (202) of starting a mixing cycle that is performed on the production plant (110);
- a capture step (204) of capturing ambient air around the production plant (110) in order to obtain at least one gas sample during the mixing cycle, this step being performed by an odor detection device (120) of the system (100) that recognizes the presence of the odorous volatile organic compounds VOCs present in the ambient air received in the device (120) by capturing ligands associated with the VOCs to be detected;
- a step of detecting olfactory profiles present in the ambient air and captured by the device (120) by means of one or more ligand capturing techniques selected from among at least one of:
  - one or more Surface Plasmon Resonance SPR techniques; and
  - one or more Mach-Zehnder MZ interferometry techniques;
  - an identification step (208) of identifying an olfactory profile in order to identify a compound (M) leaving the mixing means (112) and the production status thereof, this step being performed on the basis of at least one

sample of the ambient air captured by the device (120);
- an analysis step (210) of analysing the samples captured by the device (120) on the basis of one or more fingerprints (EA, EB) supplied by the device (120) and the extracted data represented therein;
- a construction step of constructing at least one model of olfactory profiles on the basis of the physicochemical properties of the identified rubber compound, this step comprising an introduction step (214) of introducing the physicochemical properties of the identified rubber compound into a neural network, this step being performed by the system (100); and
- a training step (216) of training the model of olfactory profiles on the basis of the olfactory profiles of the identified rubber compound;

so that the resulting model of olfactory profiles will identify the physicochemical properties of the rubber compound in the process of being produced in the production plant (110).

**2.** Method (200) according to Claim 1, wherein the step of constructing the model of olfactory profiles comprises a step of creating a reference of the olfactory profiles sought in the ambient air captured by the device (120).

**3.** Method (200) according to Claim 2, wherein the introduction step (214) of the step of constructing the model of olfactory profiles comprises a step of creating a learning database (215) of the physicochemical properties, which database is introduced into the model of olfactory profiles.

**4.** Method (200) according to any one of Claims 1 to 3, further comprising a comparison step (218) during which the identity of the physicochemical properties of the compound (M) leaving the mixing means (112), output from the model of olfactory profiles, is compared against the olfactory profile of the identified compound so that the system (100) can adjust the production plant (110) in the event that the desired properties for the compound (M) are not achieved.

**5.** Method (200) according to Claim 4, further comprising a command step (220) of commanding the adjustment of the production plant (110) in the expectation of the compound (M) leaving the mixing means (112) achieving the desired properties.

**6.** Method (200) according to Claim 5, wherein the command step (220) of commanding the adjustment of the production plant (110) comprises a step of determining a tack level of the compound (M) on the basis of a fingerprint ($E_A$, $E_B$) supplied by the device (120).

**7.** Method (200) according to any one of Claims 1 to 6, wherein, during the training step (216) of training the model of olfactory profiles, the system (100) employs a learning method selected between a machine learning method and a progressive learning method.

**8.** Method (200) according to any one of Claims 1 to 7, wherein:

- the detection step of detecting olfactory profiles comprises a step of eliminating VOC pollution from the ambient air received by the device (120), this step being performed by a filter (140) of the system (100) before the ambient air enters the device (120);
- the identification step (208) of identifying an olfactory profile comprises a step of reducing the moisture content and/or the temperature of the ambient air received by the device (120), this step being performed by a condenser (144) of the system (100); and
- the analysis step (210) of analysing the samples captured by the device (120) further comprises a step of analysing olfactory profiles in the samples prior to the analysis performed by the device (120), this step being performed by a multiplexer (146) of the system (100).

**9.** Method (200) according to any one of Claims 1 to 8, wherein the starting step (202) of starting a mixing cycle comprises an introduction step of introducing the raw materials into the mixing means (112) that are needed for producing the compound (M).

**10.** Method (200) according to any one of Claims 1 to 8, wherein the starting step (202) of starting a mixing cycle comprises an introduction step of introducing one or more masterbatches into the mixing means (112).

**11.** Method (200) according to any one of Claims 1 to 10, further comprising a simulation step of simulating a number of mixing operations yielding at least one rubber compound (M) having predetermined physicochemical properties.

**12.** Manufacturing system (100) for manufacturing rubber products that is configured to implement the method (200) for controlling the manufacture of rubber products according to any one of Claims 1 to 11, **characterized in that** the system (100) comprises:

- a production plant (110) that implements successive mixing steps, the production plant comprising at least one mixing means (112), from which one or more rubber compounds (M) is/are derived;
- an odor detection device (120) that captures ambient air around the production plant (110) in order to obtain at least one gas sample during the mixing cycle; and
- a control subsystem (130) that employs a model of olfactory profiles on the basis of the physicochemical characteristics of the rubber compounds recognised by means of one or more of the ligand capturing techniques selected from among at least one of the following techniques:

    - one or more Surface Plasmon Resonance SPR techniques; and
    - one or more Mach-Zehnder MZ interferometry techniques; so that the device (120) recognises the presence of the odorous volatile organic compounds VOCs present in the captured ambient air by capturing ligands associated with the VOCs to be detected; and

such that the model of olfactory profiles learns the physicochemical properties of the VOCs associated with the compounds (M) leaving the mixing means (112) during the rubber products production cycles carried out by the production plant (110).

**13.** System (100) according to Claim 12, wherein the subsystem (130) comprises one or more sensors that are triggered when the resulting model of olfactory profiles indicates a shift between the physicochemical properties of the compound (M) that is in the process of being produced in the production plant (110) and the expected physicochemical properties.

**14.** System (100) according to Claim 13, wherein the subsystem (130) adjusts the operation of the production plant (110)in response to the triggered sensors so as to obtain a tack level of the compound (M) on the basis of a fingerprint (EA, EB) supplied by the device (120).

**15.** System (100) according to any one of Claims 12 to 14, wherein the mixing means (112) are selected from among one or more extruders and/or one or more internal mixers.

[Fig. 1]

Terpènes
5%
Hydrocarbures cycliques
16%
Composés aromatiques
22%
Azoté
4%
Sulfureux
3%
Amines
5%
Alcools
3%
Alcanes
7%
Cétones
12%
Acides
12%
Aldéhydes
11%

[Fig. 2]

10
16
12b
14
12
Division
Δ phase
Réunion
12a

[Fig. 3]

100
130
Système de contrôle de l'extrusion (automate, ...)
AI
-
Réseau de
neurones
215
Base de
référence
112b
112a
112
M
115
114
110
117
A,B
120
EA
EB
A
B

[Fig. 4]

Phénomène clé
Capture des ligands par peptides
Techniques de capture du phénomène
Surface Plasmon Resonance
Mach-Zehnder Interferometer

[Fig. 5]

140
146
120
Filtre à charbon actif
Multiplexeur
Analyseur SPR
142
Condenseur et filtres
144

[Fig. 6]

200
202
Start
204
Capture de l'air ambiant
205
Obtenir profils olfactifs
208
Identification de profils olfactifs
210
Analyse de profils olfactifs
215
Base de référence
Introduction de propriétés physico-chimiques (COV)
214
216
Entrainement du modèle de profils olfactifs
218
Décalage?
Non
Oui
220
Ajustement de l'installation (110)
221
Mise à jour des données entrantes

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3063543
- WO 2021009440 A
- WO 2021053284 A
- WO 2021053285 A
- FR 3123988
- FR 2112099


### Littérature non-brevet citée dans la description


- **NOR H. KAMARULZAMAN** ; **NHAT LE-MINH** ; **RUTH M. FISHER** ; **RICHARD M. STUETZ**. Quantification of VOCs and the Development of Odour Wheels for Rubber Processing. *Science of the Total Environment*, 2019, 657
- **SOPHIE BRENET** ; **AURELIAN JOHN-HERPIN** ; **FRANÇOIS-XAVIER GALLAT** ; **BENJAMIN MUSNIER** ; **ARNAUD BUHOT** ; **CYRIL HERRIER** ; **TRISTAN ROUSSELLE** ; **THIERRY LIVACHE** ; **YANXIA HOU**. Surface Plasmon Resonance » en anglais)(voir « Highly-Selective Optoelectronic Nose Based on Surface Plasmon Resonance Imaging for Sensing Volatile Organic Compounds. *Analytical Chemistry*, 2018, vol. 90, 9879-9887
- **ABDULLAH A. H. et al.** Monitoring Rubber Factory Malodour Using Artificial Neural Network. *Jurnal Teknologi (Sciences & Engineering)*, 2015, vol. 77 (28), 11-16
- **SULAIMAN KHAN** ; **STÉPHANE LE CALVÉ ET DAVID NEWPORT**. A Review of Interferometry Techniques for VOC Detection. *Sensors and Actuators A : Physical,*
- **SIMON BARTHELME et al.** Correction de dérive pour l'interférométrie de Mach-Zehnder. *XXVIIIème Colloque Francophone de Traitement du Signal et des Images*, September 2022